# EUROPÄISCHE PATENTSCHRIFT

(11) **EP 3 230 961 B1**
(45) Veröffentlichungstag und Bekanntmachung des Hinweises auf die Patenterteilung: **12.07.2023**
(21) Anmeldenummer: 15816407.9
(22) Anmeldetag: 11.12.2015
(51) Int. Cl.: G01V 5/00, G07C 9/37, G01S 13/88, G07C 11/00

(54) **PERSONENIDENTIFIKATION FÜR MEHRSTUFIGE PERSONENKONTROLLEN**
PERSONAL IDENTIFICATION FOR MULTI-STAGE INSPECTIONS OF PERSONS
IDENTIFICATION DE PERSONNES POUR CONTRÔLES DE PERSONNES EN PLUSIEURS ÉTAPES

(30) Priorität: 11.12.2014 DE 102014225592
(43) Veröffentlichungstag der Anmeldung: 18.10.2017
(73) Patentinhaber: Smiths Detection Germany GmbH, 65205 Wiesbaden (DE)
(72) Erfinder: NURBEGOVIC, Emir, 55256 Oppenheim (DE); SCHUCKMANN, Arthur Christian Meinhard, 19053 Schwerin (DE)
(74) Vertreter: Klunker IP Patentanwälte PartG mbB
(86) Internationale Anmeldenummer: PCT/EP2015/079421
(87) Internationale Veröffentlichungsnummer: WO 2016/092072

(56) Entgegenhaltungen:
- US-A1- 2004 252 024
- US-A1- 2006 087 439
- US-A1- 2008 122 578
- US-A1- 2012 038 666

## Beschreibung

Die vorliegende Erfindung betrifft allgemein das Gebiet der Sicherheitskontrollen von Personen an Übergängen zu Bereichen mit erhöhten Sicherheitsanforderungen. Im Besonderen betrifft die Erfindung Möglichkeiten zur eindeutigen Identifikation einer Person in mehrstufigen Kontrollverfahren, in denen einzelne Personen bei Bedarf an wenigstens einem weiteren Kontrollort unter Berücksichtigung von Erkenntnissen an wenigstens einem vorhergehenden Kontrollort nachkontrolliert werden, wobei sicherzustellen ist, dass die Erkenntnisse an dem wenigstens einen vorhergehenden Kontrollort sicher der nachzukontrollierenden Person an dem wenigstens einen weiteren Kontrollort zugeordnet werden.

### Hintergrund der Erfindung

Sicherheitskontrollen von Personen beim Zugang zu bestimmten Infrastrukturen, wie beispielsweise den Abflugbereich von Flughäfen oder Gebäuden mit höheren Sicherheitsanforderungen (z. B. Gerichte, Gefängnisse, Diamantenminen etc.), oder im Rahmen von Großveranstaltungen (z. B. Konzerte, Sportveranstaltungen, etc.) sind bekannt. Dabei passieren Personen einen Übergangsbereich (oft Checkpoint oder Kontrollstelle genannt), an dem die Personen und ggf. vorhandenes Handgepäck beispielsweise auf verdeckt unter der Kleidung getragene bzw. am oder im Körper verborgene gefährliche oder verbotene Gegenstände oder Substanzen kontrolliert werden. Für weitere Einzelheiten bekannter Maßnahmen sei beispielsweise auf die DE 10 2006 036 108 A1 verwiesen.

Übliche Kontrollstellen an Flughäfen weisen beispielsweise schon länger sogenannte Metalldurchsuchungsrahmen auf, welche in bekannter Weise ähnlich einem frei stehenden Türrahmen aufgebaut sind, in den hochempfindliche Metalldetektoren integriert sind, um von einer zu kontrollierenden Person am Körper verdeckt mitgeführte metallische Gegenstände, wie beispielsweise Waffen, zu detektieren und einen entsprechenden Alarm auszulösen. Bei Alarmauslösung wird die betroffene Person einer Nachkontrolle durch Sicherheitspersonal beispielsweise mittels eines Handmetalldetektors und/oder manuellem Abtasten unterzogen.

Diese Kontrollstellen stellen hinsichtlich des Personendurchsatzes einen Flaschenhals dar, da Nachkontrollen immer mehr Zeit benötigen als die automatische Kontrolle durch den Metalldurchsuchungsrahmen.

Seit einigen Jahren werden an solchen Kontrollstellen neue Personenscanner eingesetzt, welche die Körperoberfläche einer Person mittels elektromagnetischer Strahlung abtasten, wobei die Strahlung im Wesentlichen die Kleidung aber nicht die Person selbst durchdringt und an der Haut der Person reflektiert wird. Anhand der rückgestreuten Strahlung können sogenannte Rückstreubilder der Person erzeugt werden, auf denen verdeckt unter der Bekleidung getragene Gegenstände oder Substanzen erkannt werden können. Als Beispiel sei auf die DE 10 2005 016 106 A1 oder die DE 10 2005 042 463 A1 verwiesen, die beide ein Verfahren und eine entsprechendes Vorrichtung zeigen.

Zur Sicherstellung der geforderten Detektionswahrscheinlichkeit wurde von den zuständigen Zertifizierungsbehörden für solche Geräte gefordert, dass die von einer kontrollierten Person erzeugten Sensordaten automatisch auswertet und ggf. nachzukontrollierende Körperbereiche als Alarmmeldung einer Sicherheitsperson angezeigt werden.

Um die Durchsatzrate der Kontrollstelle vom Zeitbedarf für die Nachkontrolle zu entkoppeln, können Nachkontrollen an einem zweiten Ort durch dort befindliches Sicherheitspersonal erfolgen.

Zum Schutz der Persönlichkeitsrechte zu kontrollierender Personen werden Detektionsergebnisse anonymisiert erfasst. Selbst bei den vorstehend genannten Rückstreuscannern oder Millimeterwellenscannern werden keine realitätsnahen Ganzkörperabbildungen einer kontrollierten Person erstellt, auf der die Person zu erkennen wäre. Stattdessen werden die nachzukontrollierenden Körperbereiche an standardisierten grafischen Stellvertretern (sogenannten Avataren) markiert. Dem Avatar sind nur Informationen betreffend die nachzukontrollierenden Körperbereiche zu entnehmen. Damit könnte es passieren, dass beispielsweise nachzukontrollierende Personen auf dem Weg zur Nachkontrollstelle versehentlich ihre Position in der Warteschlange tauschen. Dem Sicherheitspersonal an der Nachkontrollstelle ist es nicht möglich, die dort auf einer Anzeigevorrichtung angezeigten grafischen Informationen eindeutig einer Person in der Warteschlange zuzuordnen. Dies kann eine potenzielle Sicherheitslücke darstellen, die im Stand der Technik durch zusätzliches Aufsichtspersonal zur Vermeidung von Warteschlangen vermieden wird.

WO 2012/039712 A1 zeigt ein System zur kontrollierten Führung von zumindest einer an einer Kontrollstelle kontrollierten Person zu einer Nachkontrollstelle. Das System umfasst an der Kontrollstelle ein Röntgeninspektionssystem mit einem Eingangsbereich, der durch Wände und ein Zugangstor definiert ist sowie einen durch Wände und ein Ausgangstor definierten Ausgangsbereich. Die Tore werden automatisch basierend auf einem Inspektionsergebnis an der Kontrollstelle gesteuert, sodass eine kontrollierte und als sicher befundene Person den Kontrollbereich verlassen kann. Weitere Tore und Wände definieren einen zusätzlichen Haltebereich für nachzukontrollierende Personen, wobei der Haltebereich so ausgelegt ist, dass nachzukontrollierende Personen kontrolliert vereinzelt der Nachkontrollstelle zugeführt werden. Durch kontrollierte Vereinzelung der nachzukontrollierenden Personen wird das oben geschilderte Problem vermieden. Das System der WO 2012/039712 A1 kann sich aber negativ auf den Durchsatz an der Kontrollstelle auswirken, da sobald die Aufnahmekapazität der Nachkontrollstelle erreicht ist, auch die erste Kontrollstelle blockiert ist und Verzögerungen auftreten. Außerdem ist der Haltebereich mit Wänden und Toren für ohnehin möglicherweise gestresste Passagiere unangenehm, besonders wenn gemeinsam Reisende dadurch von Mitreisenden getrennt werden.

US 2005/0068165 A1 zeigt ein System und Verfahren zum Erfassen von einem biometrischen Profil für eine Person, beispielsweise einem 3D-Modell der Person oder Daten zur Erkennung des Gesichts der Person, für eine berührungslose Identifizierung und Verfolgung der Person in einem Bereich, wie beispielsweise einem Stadion. Beispielsweise kann das biometrische Profil berechtigter Personen beim Zugang zum Stadion erfasst werden, sodass unberechtigte Personen im Stadion dadurch erkannt werden können, dass kein biometrisches Profil für diese Person erfasst worden ist.

US 2004/0252024 A1 zeigt ein Checkpoint-System mit einer Gepäck-Screening-Zone, einer primären Passagier-Screening-Zone und einer sekundären Passagier-Screening-Zone. Die primäre Screening-Zone umfasst ein Sprengstoffdetektionsportal und ein Portal, an dem einem zu kontrollierenden Passagier angezeigt wird, welche Gegenstände vor dem weiteren Personen-Screening durch ein Metalldetektionsportal abzulegen sind. Die sekundäre Screening-Zone enthält soweit es den Passagier anbelangt ein weiteres Körper-Scanner-System für eine weitere Kontrolle des Passagiers. Jeder Passagier durchläuft damit die primäre als auch die sekundäre Screening-Zone, die sekundäre Screening-Zone ist damit kein vom Durchsatz der primären Screening-Zone entkoppelter Flaschenhals des Checkpoint-Systems. Ergebnisse der Metalldetektion an der ersten Screening-Zone werden weder an die sekundäre Screening-Zone übertragen noch dort bei der Durchführung des Körper-Scans berücksichtigt.

US 2006/0087439 A1 zeigt ein Personen-Screening-System zur Kontrolle von Personen an gesicherten Einrichtungen wie Flughäfen, Gerichten, Polizeistationen, gesicherten Verwaltungsgebäuden, militärischen Einrichtungen und anderen Einrichtungen. Das System verwendet u.a. Techniken zur biometrischen Identifizierung einer Person, um festzustellen, dass eine zu kontrollierende Person tatsächlich die Person ist, für die sie sich mittels eines Identifikationsdokuments ausgibt.

### Offenbarung der Erfindung

Es ist daher eine Aufgabe der Erfindung die bekannten Kontrolleinrichtungen bzw. Systeme derart zu verbessern oder weiterzubilden, dass besonders bei mehrstufigen Kontrollen eine eindeutige Zuordnung von in vorhergehenden Stufen über eine zu kontrollierende Person erfasste Kontrollinformationen zu der zugehörigen Person sichergestellt ist. Dabei soll bevorzugt vermieden werden, dass die dazu ergriffenen Maßnahmen sich nicht negativ auf den Durchsatz an einer vorhergehenden Kontrollstelle auswirken.

Die Aufgabe wird mit den Merkmalen der jeweiligen unabhängigen Ansprüche gelöst. Ausführungsbeispiele und vorteilhafte Weiterbildungen sind in den sich jeweils anschließenden Unteransprüchen definiert. Hierbei gelten Merkmale und Einzelheiten, die in Zusammenhang mit den erfindungsgemäßen Vorrichtungen und dem erfindungsgemäßen System beschrieben sind, selbstverständlich auch in Zusammenhang mit den jeweiligen erfindungsgemäßen Verfahren entsprechend und jeweils umgekehrt. Daher wird bezüglich der Offenbarung wechselseitig Bezug genommen.

Ein Kerngedanke der Erfindung besteht darin bei der automatischen Kontrolle einer Person und den dabei gegebenenfalls verdächtig identifizierten Körperbereichen der Person, für die eine Nachkontrolle durchgeführt werden soll, anhand von äußerlich verfügbaren Merkmalen der Person ein eindeutiges Identifikationsmerkmal der Person zu erzeugen, welches mit einem Datensatz, der den für eine Nachkontrolle vorgesehenen Körperbereich der Person definiert, verknüpft werden kann, sodass an nachfolgenden Kontrollstellen eine eindeutige Zuordnung der den Nachkontrollbereich definierenden Daten zur zugehörigen Person sichergestellt werden kann.

Ein erster Aspekt der Erfindung betrifft eine Kontrollvorrichtung, die zur automatischen Kontrolle einer Person bezüglich verborgener Gegenstände eine Prüfeinrichtung zur berührungslosen Kontrolle der Person aufweist. Die Prüfeinrichtung ist zur Bestimmung eines Nachkontrollbereichs der Person und Speicherung von dem Nachkontrollbereich definierenden Daten in einem Datensatz eingerichtet. Erfindungsgemäß ist nun vorgesehen, dass die Kontrollvorrichtung weiter eingerichtet ist, basierend auf einem erfassten äußeren Merkmal der Person ein eindeutiges Identifikationsmerkmal für die Person zu erzeugen und dann dem Datensatz der Person zuzuordnen.

Mithilfe des eindeutigen Identifikationsmerkmals kann die oben beschriebene potenzielle Sicherheitslücke ebenfalls ohne zusätzlichen Personaleinsatz vermieden werden. Damit ist es möglich, an einer Nachkontrollstelle mittels des eindeutigen Identifikationsmerkmals entweder (i) die zum Datensatz zugehörige nachzukontrollierende Person mittels des Identifikationsmerkmals zu erkennen und/oder (ii) nach einer erneuten Erzeugung des eindeutigen Identifikationsmerkmals in gleicher Weise wie an der ersten Kontrollstelle, den zugehörigen Datensatz der Person aus dem System oder von der ersten Kontrollstelle entsprechend dem Identifikationsmerkmal abzurufen.

Die Kontrollvorrichtung kann prinzipiell eingerichtet sein, das Identifikationsmerkmal vor, während oder im Anschluss an die automatische Kontrolle der Person mittels der berührungslosen Prüfeinrichtung zu erzeugen.

Das erzeugte Identifikationsmerkmal kann sofort wieder gelöscht werden, falls für eine gerade kontrollierte Person kein Nachkontrollbereich bestimmt wird. Alternativ ist es möglich, dass die Kontrolleinrichtung eingerichtet ist, das Identifikationsmerkmal erst dann zu erzeugen, wenn oder sobald die berührungslose Prüfeinrichtung für die Person einen Nachkontrollbereich bestimmt hat.

Die Kontrollvorrichtung kann zur Erfassung eines äußeren Merkmals der Person wenigstens eine Erfassungseinheit, beispielsweise eine zur Erfassung des Merkmals geeignete Sensorik aufweisen. Die Erfassungseinheit kann Teil der Kontrollvorrichtung sein, beispielsweise in diese integriert sein oder mit dieser drahtlos verbunden sein. Die Erfassungseinheit kann an der Kontrollvorrichtung fest installiert oder alternativ als mobiles Handgerät mit dieser kabelgebunden oder drahtlos verbunden sein.

Die Erfassungseinheit kann zur Erfassung wenigstens eines biometrischen Merkmals der Person als Basis für das Identifikationsmerkmal eingerichtet sein. Das biometrische Merkmal kann eines oder mehrere der folgenden Merkmale sein: das Papillarmuster eines Fingers der Person, die Handgeometrie und/oder die Handlinien einer Hand der Person, die Irisstruktur und/oder die Retinastruktur wenigstens eines Auges der Person, die Stimme der Person, ein Lichtbild, bevorzugt des Gesichts der Person.

In einer besonders bevorzugten Ausführung weist die Kontrollvorrichtung wenigstens eine Kamera als eine Erfassungseinheit auf oder ist mit dieser drahtgebunden oder drahtlosverbunden. Bevorzugt ist die Kamera zur Erzeugung einer Gesichtsaufnahme der Person als das Identifikationsmerkmal eingerichtet.

Bei der Kamera kann es sich um eine Standbildkamera oder Videokamera handeln. Bei einer Videokamera kann beispielsweise mittels einer Frame-Grabber-Software ein geeignetes Einzelbild für die benötigte Gesichtsaufnahme entnommen werden. Die Kamera kann eine Handkamera oder Fotoapparat sein aber auch ein Smartphone, PDA (Personal Digital Assistant) oder ein Tablet-Computer oder grundsätzlich jedes mobile Gerät mit integrierter Kamera.

Hinsichtlich der Verbindung zwischen der Erfassungseinrichtung und der Kontrollvorrichtung wurde bereits erwähnt, dass diese kabelgebunden oder drahtlos erfolgen kann. Eine beispielsweise über USB, z.B. mittels eines entsprechend robust gestalteten Kabels gebildeten Verbindung, ist vorteilhaft, da damit die Energieversorgung der Kamera bzw. des die Kamera enthaltenden Geräts sichergestellt ist. Bei einer festen Kopplung der Kabelenden mit dem jeweiligen Gerät ist die Kamera zusätzlich gegen Wegnahme geschützt. Alternativ kann die Erfassungseinrichtung mittels einer Nahbereichsfunkverbindung, wie beispielsweise Bluetooth, Nearfield Communication (NFC), WLAN etc. realisiert sein.

Ein weiterer Vorteil der Realisierung der Erfassungseinheit mittels einer mobilen Kamera, besonders bevorzugt mittels eines Smartphones, besteht darin, dass es der Person ermöglicht werden kann, das Foto ihres Gesichts (das heißt der Gesichtsaufnahme) selbst aufzunehmen (Selfie), was möglicherweise zu einer höheren Akzeptanz durch die betroffenen Personen führt.

Alternativ ist es auch möglich, eine oder mehrere Kameras als Erfassungsvorrichtungen im Bereich der Warteschlange vor der ersten Kontrollvorrichtung zu installieren. Damit kann bereits von den zu kontrollierenden Personen in der Warteschlange vor der Kontrollvorrichtung das möglicherweise später benötigte Gesichtsbild automatisch erfasst werden.

Die Verwendung eines Fotos, insbesondere einer Gesichtsaufnahme, als eindeutiges Identifikationsmerkmal für die Personen ist vorteilhaft.

Eine Gesichtsaufnahme wird möglicherweise seitens der Benutzer eher akzeptiert, da eine Aufnahme des eigenen Gesichts zu ähnlichen Zwecken bereits beispielsweise im Reisepass, Ausweisdokumenten, Führerschein, Gesundheitskarte etc. verwendet wird. Persönlichkeitsrechtliche Bedenken können hier ausgeschlossen werden, besondere wenn die Aufnahme nach abgeschlossener Kontrolle der Person gelöscht wird.

Ein weiterer Vorteil einer Gesichtsaufnahme einer zu kontrollierenden Person liegt in der hohen Aktualität des Fotos, welches nur einige Sekunden bzw. Minuten zuvor aufgenommen wurde. Daher ist ein Gesichtsbild als biometrisches Merkmal in diesem Anwendungskontext besonders robust, was oft für Passbilder nicht gilt, da sich Form und Textur des menschlichen Gesichts mit der Zeit verändern, was zu größeren Diskrepanzen zwischen einem älteren Passfoto und dem aktuellen Erscheinungsbild einer Person führen kann. Jedenfalls erhöht die Verwendung eines aktuellen Gesichtsfotos im hier vorgeschlagenen Kontext die Sicherheit des Verfahrens.

Ein weiterer Vorteil der Verwendung eines Gesichtsfotos besteht darin, dass es relativ einfach ohne große technische, insbesondere teure Maßnahmen erfasst werden kann.

Noch ein Vorteil der Verwendung eines Gesichtsfotos besteht darin, dass durch die zu kontrollierende Person keine zusätzlichen Handlungen an der Nachkontrollstelle erforderlich sind, da ein dem Datensatz zugeordnetes Gesichtsfoto, wenn es dem Sicherheitspersonal an der Nachkontrollstelle angezeigt wird, unmittelbar zur Identifikation und Verifikation der nachzukontrollierenden Person geeignet ist. Bei Verwendung eines der anderen oben genannten biometrischen Merkmale muss dieses möglicherweise an der Nachkontrollstelle ein zweites Mal erfasst werden. Je nach verwendeter Technologie bzw. Sensorik ist dies aber beim aktuellen technischen Stand beispielsweise für Fingerabdrücke ebenfalls kein Problem.

Das heißt, zusammenfassend stellt ein Gesichtsbild einer nachzukontrollierenden Person eine besonders bevorzugte Ausführung des eindeutigen Identifikationsmerkmals der vorliegenden Erfindung dar, welches insbesondere einfach in mehrstufige Kontrollverfahren integrierbar ist.

Hinsichtlich der berührungslosen Prüfeinrichtung sei angemerkt, dass diese grundsätzlich bevorzugt auf einem physikalischen Verfahren basiert, welches eine automatisierte und berührungslose Kontrolle einer zu kontrollierenden Person auf versteckt in und/oder unter der Kleidung mitgeführter gefährlicher oder verbotener Gegenstände ermöglicht. In einer ersten bevorzugten Ausführungsform ist die Prüfeinrichtung eingerichtet, die zu kontrollierende Person mit Röntgenstrahlen oder elektromagnetischen Millimeterwellen abzutasten und ein Rückstreubild der Körperoberfläche der Person, bevorzugt der Vorderseite und der Rückseite der Person, zu erzeugen. In einer alternativen bevorzugten Ausführungsform ist die Prüfeinrichtung eingerichtet, die zu kontrollierende Person mit die Person durchdringenden Röntgenstrahlen abzutasten und ein Transmissionsbild der Person zu erzeugen.

In einer besonders vorteilhaften Ausführung der Kontrollvorrichtung kann diese eingerichtet sein, basierend auf wenigstens einem mittels der Prüfeinrichtung erfassten Merkmal der Person das darauf basierende eindeutige Identifikationsmerkmal für die Person zu erzeugen. Beispielsweise kann eine Prüfeinrichtung, welche die zu kontrollierende Person mit elektromagnetischen Millimeterwellen oder Röntgenstrahlen oberflächlich abtastet, so eingerichtet sein, ein Abbild, bevorzugt des Gesichts, der Person als biometrisches Identifikationsmerkmal zu erzeugen. Dieses Identifikationsmerkmal kann, ähnlich wie ein Gesichtsfoto, dem Datensatz, der einen Nachkontrollbereich der Person definiert, zugeordnet werden. Ein weiteres biometrisches Identifikationsmerkmal, das mit hoher Zuverlässigkeit aus einem solchen Millimeterwellenbild gewonnen werden kann, wäre das Geschlecht einer Person. Als weitere biometrische Merkmale können auch der Körperbau/Statur und/oder die Körpergröße und/oder geschätztes Körpergewischt der Person erfasst und ausgewertet werden. Bei der besonders vorteilhaften Ausführung der Kontrollvorrichtung übernimmt diese quasi die Aufgabe der Erfassungsvorrichtung. Dies ist wirtschaftlich vorteilhaft, da die Erfassungsvorrichtung nicht durch zusätzliche Hardware realisiert werden muss. Auch können die Identifikationsmerkmale der "emulierten" Erfassungsvorrichtung automatisch den von der Kontrollvorrichtung erfassten Daten zugeordnet werden.

Ein zweiter Aspekt der Erfindung betrifft eine Nachkontrollvorrichtung mit einer Anzeigeeinrichtung zur Anzeige eines grafischen Stellvertreters einer Person, wobei die Anzeigeeinrichtung eingerichtet ist, entsprechend einem der Person zugeordneten Datensatz einen Nachkontrollbereich der Person zum Auffinden möglicherweise verborgener Gegenstände visuell erkennbar anzuzeigen.

Erfindungsgemäß kann die Nachkontrollvorrichtung gemäß einer ersten Variante eingerichtet sein, ebenfalls basierend auf einem erfassten äußeren Merkmal der Person ein eindeutiges Identifikationsmerkmal für die Person zu erzeugen. Bei dem erfassten äußeren Merkmal sowie dem darauf basierend erzeugten Identifikationsmerkmal handelt es sich um dieselben Merkmale, die an einer vorhergehenden Kontrollstelle, d.h. einer der vorstehend besprochenen Kontrollvorrichtungen verwendet wurden.

Diese erste Alternative eignet sich besonders für Ausführungen, bei denen als äußeres Merkmal der Person ein solches erfasst wurde, das Sicherheitspersonal nicht unmittelbar in die Lage versetzen kann anhand des Identifikationsmerkmals die nachzukontrollierende Person zu identifizieren. Daher ist die Nachkontrollvorrichtung bevorzugt eingerichtet, mittels des an der Nachkontrollvorrichtung erneut erzeugten Identifikationsmerkmals die Zugehörigkeit eines an der Anzeigevorrichtung bereits angezeigten Nachkontrollbereichs zu einer nachzukontrollierenden Person zu verifizieren.

Alternativ ist es auch möglich, das nach erneutem Erzeugen des eindeutigen Identifikationsmerkmals dieses dazu benutzt wird, den zu der Person zugehörigen Datensatz, welcher den Nachkontrollbereich definiert, mittels des Identifikationsmerkmals von einer Datenquelle abzurufen. Bei der Datenquelle kann es sich beispielsweise um einen zentralen Server der Kontrollstelle handeln, an den die Kontrollvorrichtung des ersten Aspekts einen Datensatz zusammen mit dem zugehörigen eindeutigen Identifikationsmerkmal übertragen hatte. Ein solcher Server zur Ablage der Kontrolldaten kann von der Kontrollstelle weit abgesetzt angeordnet sein und mit dieser durch ein Computernetzwerk (LAN und/oder WAN) bekannter Art verbunden sein. Es ist aber auch möglich, dass, beispielsweise wenn mehrere Nachkontrollvorrichtungen einer bestimmten Kontrollvorrichtung des ersten Aspekts zugeordnet sind, der zugehörige Datensatz mittels des Identifikationsmerkmals direkt von der zugeordneten Kontrollvorrichtung des ersten Aspekts durch die Nachkontrollvorrichtung abgerufen wird.

In einer zweiten Alternative kann die Nachkontrollvorrichtung eingerichtet sein, ein dem Datensatz eines angezeigten Nachkontrollbereichs an der Kontrollstelle des ersten Aspekts zugeordnetes Identifikationsmerkmal, bevorzugt eine Aufnahme, besonders bevorzugt eine Gesichtsaufnahme (Gesichtsfoto), der Person für eine visuelle Verifikation der Zugehörigkeit des Datensatzes zu dieser Person anzuzeigen. Mit anderen Worten kann dem Sicherheitspersonal an der Nachkontrollvorrichtung an der Anzeigevorrichtung neben dem grafischen Stellvertreter der Person, an dem der oder mehrere Nachkontrollbereiche grafisch hervorgehoben sind, auch die zugehörige Gesichtsaufnahme der Person angezeigt werden. Damit ist es dem Sicherheitspersonal ohne weitere technische Maßnahmen möglich, die nachzukontrollierende Person zu erkennen/identifizieren.

In einer besonderen Ausführung werden das oder die erfassten biometrischen Identifikationsmerkmale, soweit sie dazu geeignet sind, verwendet, den grafischen Stellvertreter (Avatar) entsprechend zu variieren oder modifizieren. Beispielsweise könnte bei der Darstellung des Avatars ein oder mehrere erfasste Merkmale der Person wie Körpergröße, Körperbau, Geschlecht etc. verwendet werden, um den Avatar als Strichzeichnung entsprechend anzupassen. Zur besseren Orientierung könnte auf der Anzeigeeinheit beispielsweise neben dem Avatar eine Messlatte dargestellt werden.

Ein dritter Aspekt der Erfindung betrifft ein mehrstufiges Kontrollsystem mit wenigstens einer Kontrollvorrichtung gemäß dem ersten Aspekt der Erfindung, die an einem ersten Ort angeordnet ist, und wenigstens einer Nachkontrollstelle an einem zweiten Ort mit wenigstens einer Nachkontrollvorrichtung, bevorzugt mehreren Nachkontrollvorrichtungen gemäß dem zweiten Aspekt der Erfindung.

Ein vierter Aspekt der Erfindung betrifft ein Verfahren mit automatischem Kontrollieren einer Person bezüglich verborgener Gegenstände mittels eines berührungslosen Prüfverfahrens, wobei ein Nachkontrollbereich der Person bestimmt wird und Speichern von dem Nachkontrollbereich definierenden Daten in einem Datensatz. Erfindungsgemäß weist das Verfahren weiter auf: Erfassen eines äußeren Merkmals der Person; Erzeugen eines auf dem äußeren Merkmal basierenden eindeutigen Identifikationsmerkmals für die Person; und Zuordnen des Identifikationsmerkmals zu dem Datensatz.

Entsprechend den oben ausführlich diskutierten Vorrichtungen beinhaltet Erfassen eines äußeren Merkmals der Person bevorzugt Erfassen wenigstens eines biometrischen Merkmals der Person, wie im Zusammenhang mit dem ersten Aspekt besprochen.

Das Identifikationsmerkmal kann grundsätzlich jedes Mal für eine kontrollierte Person vor, während oder nach dem automatischen Kontrollieren der Person erzeugt werden. Jedenfalls ist es bevorzugt, das erzeugte Identifikationsmerkmal sofort zu löschen, sobald festgestellt wird, dass für die Person kein Nachkontrollbereich bestimmt wurde.

Alternativ ist es möglich, das Identifikationsmerkmal nur dann zu erzeugen, wenn oder sobald im Schritt des automatischen Kontrollierens der Person für die Person ein Nachkontrollbereich bestimmt wird.

Wie ebenfalls im Zusammenhang mit dem ersten Aspekt bereits erläutert, kann beim automatischen Kontrollieren der Person, die zu kontrollierende Person mit Röntgenstrahlen oder elektromagnetischen Millimeterwellen abgetastet und basierend darauf ein Rückstreubild der Körperoberfläche der Person erzeugt werden. Es ist auch möglich, die zu kontrollierende Person mit Röntgenstrahlen abzutasten und darauf basierend ein Transmissionsbild (Röntgenbild) der Person zu erzeugen.

Ebenfalls ist es dann möglich, mittels des berührungslosen Prüfverfahrens erfasster Merkmale der Person das darauf basierende Identifikationsmerkmal für die Person zu erzeugen. Bezüglich näherer Einzelheiten oder Beispiele sei auf die Erläuterungen im Zusammenhang mit dem ersten Aspekt der Erfindung verwiesen.

Ein fünfter Aspekt der Erfindung betrifft ein Verfahren zur Nachkontrolle einer Person zum Auffinden verborgener Gegenstände mit Anzeigen des grafischen Stellvertreters der Person, wobei entsprechend einem der Person zugeordneten Datensatz ein Nachkontrollbereich an dem grafischen Stellvertreter visuell erkennbar angezeigt wird.

Erfindungsgemäß weist das Verfahren gemäß einer ersten Alternative auf: Erzeugen eines auf einem äußeren Merkmal der Person basierenden eindeutigen Identifikationsmerkmals für die Person.

Wie bereits im Zusammenhang mit dem ersten Aspekt erläutert, wird bevorzugt dasselbe Merkmal erfasst und darauf basierend dasselbe Identifikationsmerkmal erzeugt, wie dem Verfahren gemäß dem vierten Aspekt der Erfindung. Damit ist es möglich, mittels des Identifikationsmerkmals die Zugehörigkeit eines an der Anzeigevorrichtung angezeigten Nachkontrollbereichs zu einer Person zu verifizieren. Alternativ kann basierend auf dem Identifikationsmerkmal der zugehörige Datensatz an einer Datenquelle identifiziert und von dort abgerufen werden.

Gemäß einer zweiten Alternative des Verfahrens erfolgt bevorzugt: Anzeigen eines dem Datensatz eines angezeigten Nachkontrollbereichs an einer anderen Kontrollstelle zugeordneten Identifikationsmerkmals, insbesondere einer Aufnahme, besonders bevorzugt einer Gesichtsaufnahme, der Person und darauf basierend ein visuelles Verifizieren der Zugehörigkeit des Datensatzes zu der Person.

Schließlich betrifft ein sechster Aspekt der Erfindung ein zweistufiges Kontrollverfahren mit einer ersten Stufe mit einem Verfahren gemäß dem vierten Aspekt der Erfindung an einer zweiten Stufe mit einem Verfahren gemäß dem fünften Aspekt der Erfindung.

### Bevorzugte Ausführungsbeispiele

Weitere Vorteile, Merkmale und Einzelheiten der Erfindung ergeben sich aus der nachfolgenden Beschreibung, in der unter Bezugnahme auf die Zeichnungen ein Ausführungsbeispiel der Erfindung im Einzelnen beschrieben ist. Dabei können die in den Ansprüchen und in der Beschreibung erwähnten Merkmale jeweils einzeln für sich oder in beliebiger Kombination erfindungswesentlich sein. Ebenso können die vorstehend genannten und die hier weiter ausgeführten Merkmale je für sich oder zu mehreren in beliebigen Kombinationen Verwendung finden. Funktionsähnliche oder identische Bauteile oder Komponenten sind teilweise mit gleichen Bezugszeichen versehen. Die in der Beschreibung der Ausführungsbeispiele verwendeten Begriffe "links", "rechts", "oben" und "unten" beziehen sich auf die Zeichnungen in einer Ausrichtung mit normal lesbarer Figurenbezeichnung bzw. normal lesbaren Bezugszeichen. Die gezeigten und beschriebenen Ausführungsformen sind nicht als abschließend zu verstehen, sondern haben beispielhaften Charakter zur Erläuterung der Erfindung. Die detaillierte Beschreibung dient der Information des Fachmanns, daher werden bei der Beschreibung bekannte Schaltungen, Strukturen und Verfahren nicht im Detail gezeigt oder erläutert, um das Verständnis der vorliegenden Beschreibung nicht zu erschweren.
Figur 1 zeigt eine stark vereinfachte Draufsicht auf ein mehrstufiges Personenkontrollverfahren mittels einer Kontrollvorrichtung und mehreren Nachkontrollvorrichtungen.
Figur 2 zeigt ein erstes Ausführungsbeispiel für eine Kontrollvorrichtung zur automatischen Kontrolle einer Person bezüglich verborgener Gegenstände mit einer Inspektionseinrichtung zur berührungslosen Inspektion der Person.
Figur 3 zeigt ein zweites Ausführungsbeispiel für eine Kontrollvorrichtung zur automatischen Kontrolle einer Person bezüglich verborgener Gegenstände mit einer Inspektionseinrichtung zur berührungslosen Inspektion der Person.
Figur 4 zeigt ein Ausführungsbeispiel für den Inhalt einer Anzeigeeinrichtung zur Anzeige eines grafischen Stellvertreters einer Person mit visuell erkennbar angezeigten Nachkontrollbereichen für die Person gemäß einem besonders bevorzugten Ausführungsbeispiel.
Figur 5 ist ein Flussdiagramm zur Veranschaulichung eines Kontrollverfahrens zum automatischen Kontrollieren einer Person bezüglich verborgener Gegenstände gemäß einem Ausführungsbeispiel der Erfindung.
Figur 6 ist ein Ausführungsbeispiel für ein Nachkontrollverfahren zum Nachkontrollieren einer Person zum Auffinden verborgener Gegenstände basierend auf der Anzeige eines grafischen Stellvertreters der Person, an dem ein visuell erkennbarer Nachkontrollbereich für die Person angezeigt wird, gemäß einem bevorzugten Ausführungsbeispiel.

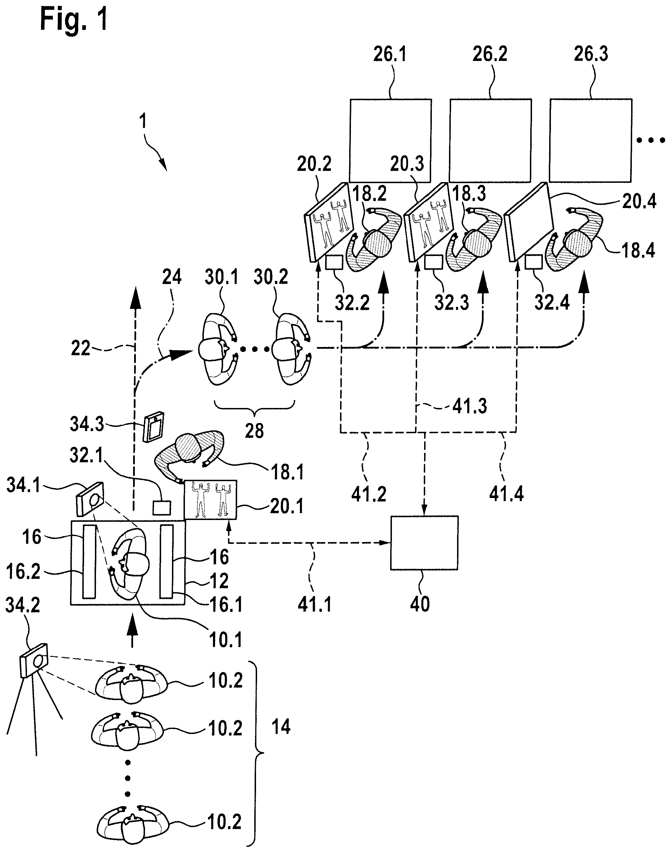

Figur 1 zeigt eine Draufsicht auf eine schematische Darstellung einer mehrstufigen Sicherheitsabfertigung (security check) 1 für Personen beim Übergang in einen Infrastrukturbereich mit erhöhen Sicherheitsanforderungen. Dabei kann es sich beispielsweise um einen Zugangspunkt auf einem Flughafen für Flugpassagiere zum Sicherheitsbereich handeln.

Im Rahmen der Sicherheitsabfertigung 1 erfolgt in bekannter Weise eine Kontrolle des Handgepäcks und gegebenenfalls der Schuhe von Passagieren (nicht dargestellt). Üblicherweise werden dabei das Handgepäck, Jacken, Schuhe und andere Gegenstände, die der Passagier bei sich trägt, mittels Röntgeninspektion untersucht. Dabei werden Gegenstände und Substanzen im Inneren beispielsweise des Handgepäcks sichtbar gemacht und auf verborgene bzw. versteckte gefährliche Inhalte, wie Waffen, verbotene Gegenstände oder gefährliche Substanzen kontrolliert.

Neben der vorstehend genannten Kontrolle des Handgepäcks erfolgt ebenfalls eine Kontrolle der Passagiere, um gefährliche oder verbotene Gegenstände, die der Passagier verdeckt an seinem Körper oder in der Kleidung versteckt bei sich trägt, aufzufinden.

Hierzu wird ein Passagier 10.1 zunächst mittels einer ersten Kontrollvorrichtung 12 an einem ersten Ort einer automatischen Kontrolle bezüglich verborgener Gegenstände unterzogen. Weitere Passagiere 10.2, besonders zu Hauptverkehrszeiten, halten sich dabei in einer Warteschlange 14 vor der jeweiligen ersten Kontrollvorrichtung 12 auf, bis sie an der Reihe sind.

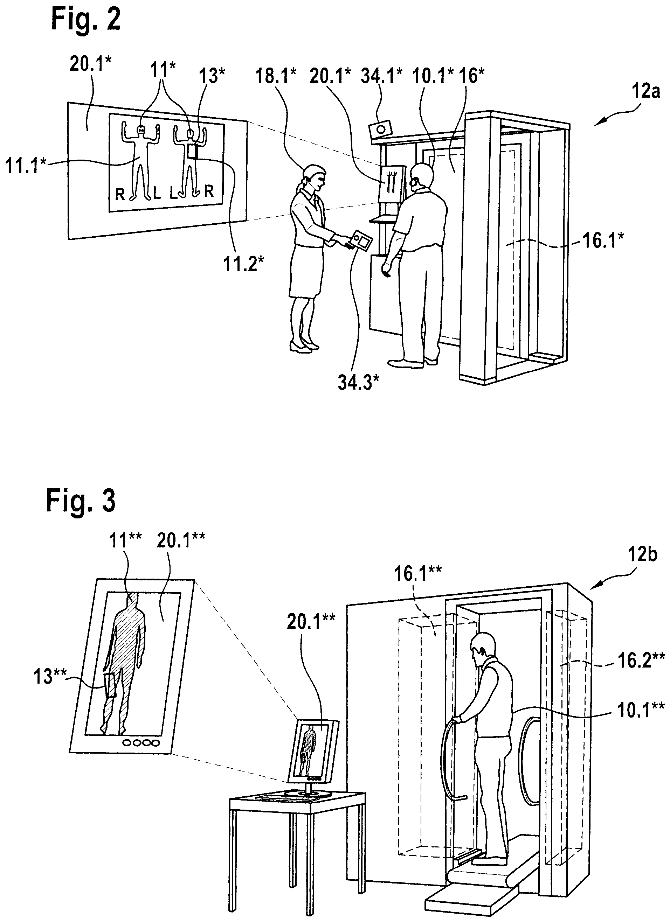

In der Figur 1 befindet sich der Passagier 10.1 in der ersten Kontrollvorrichtung 12, um darin automatisch auf verborgene Gegenstände mittels einer in der Kontrollvorrichtung 12 integrierten Inspektionseinrichtung 16 berührungslos inspiziert zu werden. Je nach Prinzip und Ausführung kann die Inspektionseinrichtung 16 eine oder mehrere Einheiten 16.1, 16.2 aufweisen. Beispielsweise kann jede Einheit 16.1, 16.2 eine Sende-/Empfangseinheit für Röntgenstrahlen oder elektromagnetische Millimeterwellen sein, wobei eine der Einheiten eine Körperseite der Person 10.1 abtastet und die andere die andere Körperseite der Person 10.1 abtastet. Beispielsweise kann die erste Einheit 16.1 eine Quelle für Röntgenstrahlen zur durchstrahlenden Abtastung der Person 10.1 sein. Die zweite Einheit 16.2 ist dann eine entsprechende Detektoreinheit, mittels der von der Person nicht absorbierte Strahlung detektiert wird, um ein entsprechendes Transmissionsbild (Röntgenbild) der Person 10.1 zu erzeugen. Im Zusammenhang mit den Figuren 2 und 3 werden zwei mögliche Ausführungsbeispiele für eine solche Kontrollvorrichtung 12 näher erläutert.

Die Kontrollvorrichtung 12 wird üblicherweise von wenigstens einem Sicherheitsbediensteten 18.1 beaufsichtigt. Über eine Anzeigevorrichtung 20.1, die in die Kontrollvorrichtung 12 integriert ist (oder alternativ mit dieser operativ verbunden ist), werden dem Sicherheitsbediensteten 18.1 Inspektionsinformationen betreffend die gerade in der Kontrollvorrichtung 12 kontrollierte Person 10.1 angezeigt.

Die Kontrollvorrichtung 12 führt die Inspektion der Person 10.1 automatisch durch, wobei sämtliche über die Person 10.1 erzeugten Inspektionsinformationen an der Vorrichtung programmgesteuert, das heißt mittels entsprechender Softwareprogramme, vollautomatisch selbsttätig ausgewertet werden. Sollte die automatische Kontrolle der Person 10.1 zu dem Ergebnis führen, dass mit der von entsprechenden Vorschriften geforderten Sicherheitsschwelle davon auszugehen ist, dass die kontrollierte Person keine gefährlichen oder verbotenen Gegenstände verdeckt an sich trägt, wird dem Sicherheitsbediensteten 18.1 auf der Anzeigeeinheit 20.1, beispielsweise mittels eines grünen Bildschirms, signalisiert, dass die Person unauffällig ist. Die Person 10.1 darf sich dann beispielsweise auf dem Weg 22 in den Sicherheitsbereich bewegen. Vorher kann die Person 10.1 noch ihr kontrolliertes Gepäck (falls vorhanden) aufnehmen und, um beim Beispiel des Flughafens zu bleiben, sich auf den Weg zum entsprechenden Abflugsteig (Gate) im Sicherheitsbereich begeben.

Sollte die Kontrollvorrichtung 12 aufgrund der automatischen Kontrolle der Person 10.1 jedoch feststellen, dass die Person 10.1 möglicherweise durch die Kleidung verdeckt am Körper oder in der Kleidung versteckt Gegenstände bei sich trägt, wird dem Sicherheitsbediensteten 18.1 auf der Anzeigeeinheit 20.1 eine entsprechende Alarmmeldung angezeigt. Dementsprechend muss die Person 10.1 einer Nachkontrolle durch einen Sicherheitsbediensteten 18.2, 18.3 oder 18.4 zugeführt werden. Das heißt, der Passagier 10.1 muss sich auf dem Weg 24 zu entsprechenden Nachkontrollvorrichtungen 26.1, 26.2, 26.3 begeben. Dort wird der Passagier 10.1 dann einer Nachkontrolle, beispielsweise mit manuellem Abtasten, einer eingehenderen körperlichen Inspektion unterzogen, um das Vorhandensein gefährlicher oder verbotener Gegenstände bei der Person 10.1 auszuschließen.

Wie bereits angesprochen, erfolgt die Nachkontrolle an einem zum ersten Ort der Kontrollvorrichtung 12 verschiedenen zweiten Ort, um dem Durchsatz an der ersten Kontrollvorrichtung 12 durch die Nachkontrollen nicht zu beeinträchtigen.

Da die Nachkontrolle einer Person 10.1 üblicherweise deutlich längere Zeit in Anspruch nimmt als die automatische Kontrolle mit der ersten Kontrollvorrichtung 12 kann es auch vor den Nachkontrollvorrichtungen zu einer Warteschlange 28 mit nachzukontrollierenden Passagieren 30.1, 30.2 kommen.

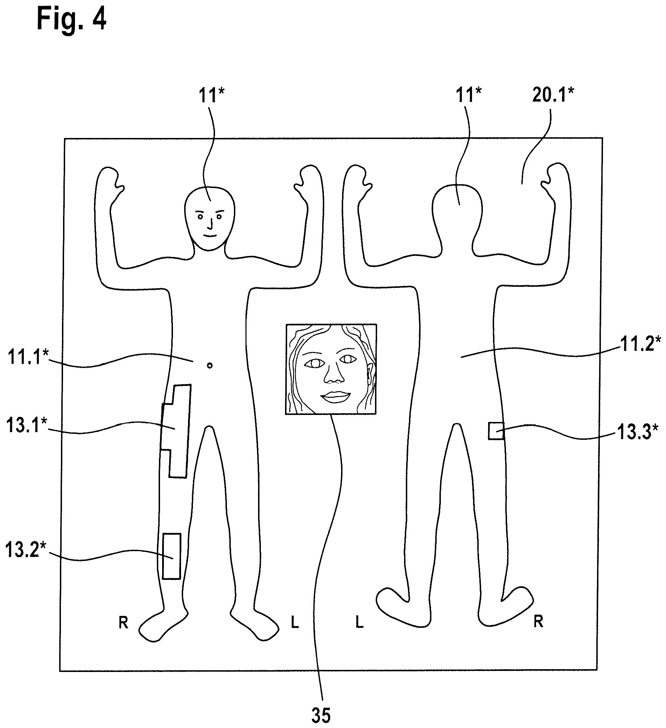

Grundsätzlich könnte eine von der ersten Kontrollvorrichtung 12 als auffällig eingestufte Person 10.1 oder 30.1, 30.2 einer vollständigen körperlichen Nachkontrolle an einer der Nachkontrollvorrichtungen 26.1, 26.2, 26.3 unterzogen werden. Dies würde jedoch den Zeitaufwand für die Nachkontrolle unnötig erhöhen und im Übrigen die bereits mithilfe der ersten Kontrollvorrichtung 12 gewonnenen Erkenntnisse ungenutzt lassen. Aus diesem Grund zeigt die Kontrollvorrichtung 12 auf der Anzeigeeinheit 20.1 an einem grafischen Stellvertreter der kontrollierten Person 10.1 an, für welchen Körperbereich oder ggf. für welche Körperbereiche die automatische Inspektionseinrichtung Hinweise auf die Anwesenheit von verborgenen Gegenständen erfasst hat. Ein Beispiel für eine solche grafische Anzeige wird weiter unten im Zusammenhang mit der Figur 4 näher besprochen.

Problematisch hinsichtlich eines effizienten Kontrollablaufs ist es sicherzustellen, dass die an der Kontrollstelle 12 über die automatisch inspizierte Person 10.1 erhaltenen Kontrollinformationen als Grundlage für die Nachkontrolle durch einen an den Nachkontrollvorrichtungen 26.1, 26.2, 26.3 wartenden Sicherheitsbediensteten 18.2, 18.3, 18.4 so übermittelt werden, dass die Kontrollinformationen dort der richtigen Person zugeordnet werden.

Aus diesem Grund ist an jeder Nachkontrollvorrichtung 26.1, 26.2, 26.3 ebenfalls eine Anzeigeeinheit 20.2, 20.3, 20.4 vorgesehen, auf der dem dort anwesenden Sicherheitsbediensteten 18.2, 18.3, 18.4 die zu der nachzukontrollierenden Person, beispielsweise 30.1 oder 30.2, gehörigen, durch die erste Kontrollvorrichtung 12 ermittelten, Nachkontrollbereiche für die Nachkontrolle angezeigt werden. Das heißt, an der ersten Kontrollvorrichtung 12 wurden die den Nachkontrollbereich einer nachzukontrollierenden Person 10.1, 30.1, 30.2 definierenden Daten in einem jeweiligen Datensatz gespeichert. Wenn diese Daten einfach entsprechend ihrer zeitlichen Erfassung an eine jeweils frei werdende Nachkontrollvorrichtung 26.1, 26.2, 26.3 weitergeleitet würden, kann nur sichergestellt werden, dass die zu dem jeweiligen Datensatz gehörige Person, zu der "richtigen" Nachkontrollvorrichtung 26.1, 26.2, 26.3 geht, wenn auf dem Weg dorthin keine Warteschlange 28 vorhanden ist. Falls sich jedoch eine Warteschlange 28 gebildet hat, das heißt, wenn wenigstens zwei wartende nachzukontrollierende Personen 30.1, 30.2 vor den Nachkontrollvorrichtungen 26.1, 26.2, 26.3 befinden, könnte absichtlich oder auch unabsichtlich eine Vertauschung der Personen 30.1, 30.2 in der Warteschlange 28 dazu führen, dass sich eine nachzukontrollierende Person 30.1, 30.2 nicht an die Nachkontrollvorrichtung 26.1, 26.2 begibt, an der die ihr zugehörigen die Nachkontrollbereiche definierenden Daten übermittelt wurden. Diese mögliche Sicherheitslücke wird im Stand der Technik beispielsweise durch einen entsprechenden Personaleinsatz zur Vermeidung von Warteschlangen geschlossen.

Grundsätzlich kann eine Vielzahl von Maßnahmen ergriffen werden, um beispielsweise eine auffällige Person 10.1 an der ersten Kontrollvorrichtung 12 mit einem Identifikationsmerkmal so zu kennzeichnen, dass dieses als Zuordnungskriterium an einer der Nachkontrollvorrichtungen 26.1, 26.2, 26.3 weitgehend fälschungssicher verwendet werden könnte. Beispielsweise könnte an der ersten Kontrollvorrichtung 12 eine fälschungssichere Banderole ausgedruckt werden, auf der sich ein maschinenlesbarer Barcode als Identifikationsmerkmal befindet. Diese Banderole könnte der Person 10.1 am Handgelenk befestigt werden, sodass die Person 10.1 anhand dieses Identifikationsmerkmals eindeutig an einer der Nachkontrollvorrichtungen 26.1, 26.2, 26.3 identifiziert werden kann. Basierend auf dem Identifikationsmerkmal könnte auch der richtige Datensatz, der den zugehörigen Nachkontrollbereich definiert, abgerufen werden. Diese Lösung ist jedoch nicht optimal. Zunächst würde das Erzeugen und Anlegen einer solchen Sicherheitsbanderole zusätzlichen materiellen und zeitlichen Aufwand bedeuten. Bei einer zusätzlichen technischen Einrichtung können zusätzliche Störungen auftreten. Auch ist nicht auszuschließen, dass ein solches materielles Identifikationsmerkmal absichtlich in einer Warteschlange zwischen wartenden Personen 30.1, 30.2 doch getauscht wird.

Die im Folgenden vorgeschlagene Lösung geht daher andere Wege. Dazu ist vorgesehen, dass die Kontrollvorrichtung 12 zusätzlich eingerichtet ist, basierend auf einem erfassbaren äußeren Merkmal der Person 10.1 ein darauf basierendes eindeutiges Identifikationsmerkmal für die Person 10.1 zu erzeugen. Das Identifikationsmerkmal wird dann dem Datensatz der Person 10.1 zugeordnet, der den Nachkontrollbereich der Person 10.1 bestimmt, wie er von der Kontrollvorrichtung 12 basierend auf dem berührungslosen Inspektionsverfahren bestimmt wurde.

Bei dem erfassbaren äußeren Merkmal der Person 10.1 handelt es sich bevorzugt um wenigstens ein biometrisches Merkmal der Person 10.1, welches unmittelbar das Identifikationsmerkmal darstellt oder als Basis zur Erzeugung desselben dient. Dazu kann die Kontrollvorrichtung 12 mit einer entsprechenden Erfassungseinheit ausgestattet oder mit dieser verbunden sein.

Als äußerlich erfassbare biometrische Merkmale eignen sich hier besonders: das Papillarmuster eines Fingers der Person (Fingerabdrücke), die Handgeometrie und/oder die Handlinien einer Hand der Person 10.1, die Irisstruktur und/oder die Retinastruktur wenigstens eines Auges der Person 10.1 oder die Stimme der Person 10.1. Diese biometrischen Merkmale können mit einer dem Fachmann bekannten Erfassungseinheit 32.1 für das entsprechende biometrische Merkmal an der Kontrollvorrichtung 12 erfasst werden. Beispielsweise kann die Erfassungseinheit 32.1 eine Scan-Einrichtung für Fingerabdrücke oder Handlinien, eine optische Erfassungseinrichtung zum Scannen der Irisstruktur und/oder der Retinastruktur eines Auges sein oder eine akustische Aufnahmeeinrichtung zur Aufnahme von Stimmen sein.

Die Kontrollvorrichtung 12 ist eingerichtet, basierend auf dem erfassten äußeren Merkmal, das heißt dem biometrischen Merkmal der Person 10.1, das darauf basierende eindeutige Identifikationsmerkmal für die Person 10.1 zu erzeugen und dem Datensatz der Person 10.1 zuzuordnen, der den Nachkontrollbereich für die Person bestimmt.

Entsprechend dieser Variante sind an den Nachkontrollvorrichtungen 26.1 bis 26.3 ebenfalls entsprechende Erfassungseinheiten 32.2 bis 32.4 vorgesehen. Entsprechend sind auch die Nachkontrollvorrichtungen 26.1 bis 26.3 eingerichtet, basierend auf dem erfassten äußeren biometrischen Merkmal der Person 10.1 das entsprechende darauf basierende eindeutige Identifikationsmerkmal für die Person 10.1 zu erzeugen.

Basierend auf dem Identifikationsmerkmal kann die Nachkontrollvorrichtung 26.1 bis 26.3 dann die Zugehörigkeit eines an der jeweiligen Anzeigeeinheit 20.2 bis 20.4 angezeigten Nachkontrollbereichs der für die Nachkontrolle herantretenden Person verifizieren.

Alternativ ist es möglich, dass die Nachkontrollvorrichtung 26.1 bis 26.3 so eingerichtet sind, dass sie basierend auf dem Identifikationsmerkmal den zugehörigen Datensatz an einer Datenquelle identifiziert und dann von dort abruft. Die Datenquelle kann beispielsweise ein zentraler Daten-Server 40 an der Kontrollstelle 1 sein bzw. die erste Kontrollvorrichtung 12 selbst sein. Der Daten-Server 40 zur Ablage der Datensätze (Kontrolldaten) kann sich von der Kontrollstelle 1 räumlich abgesetzt befinden und mit dieser durch ein Computernetzwerk (LAN und/oder WAN) bekannter Art verbunden sein.

Die im Zusammenhang mit den Erfassungseinheiten 32.1 bis 32.4 erläuterte Lösung reduziert den zur Vermeidung von Warteschlangen erforderlichen Personaleinsatz, erfordert jedoch zusätzlichen materiellen Aufwand in Form der genannten Erfassungseinheiten 32.1 bis 32.4. Darüber hinaus stellt die Erfassung der genannten biometrischen Merkmale ein Akzeptanzproblem bei den betroffenen Personen dar, da diese grundsätzlich darauf vertrauen müssen, dass erfasste biometrische Daten tatsächlich nach einer Verwendung gelöscht werden.

Daher wird bei einer besonders bevorzugten Ausführung als biometrisches Merkmal ein Abbild der in der ersten Kontrollvorrichtung 12 automatisch inspizierten Person 10.1, besonders des Gesichts der Person 10.1 als Identifikationsmerkmal erzeugt. Dazu ist an der ersten Kontrollvorrichtung 12 eine entsprechende Bilderfassungseinheit, beispielsweise wenigstens eine der Kameras 34.1, 34.2, 34.3 vorgesehen.

Eine Bilderfassungseinheit kann als Kamera 34.1 in die Kontrollvorrichtung 12 integriert oder an dieser angebracht sein, sodass die Person 10.1, vor, während oder nach dem automatischen Kontrollieren mittels der berührungslosen Inspektionseinrichtung fotografiert werden kann.

Alternativ oder zusätzlich kann eine Bilderfassungseinrichtung in Form der Kamera 34.2 im Bereich der Warteschlange 14 offen oder verdeckt aufgestellt sein. Mit der Kamera 34.2 kann bereits eine entsprechende Abbildung der Person vor dem Betreten der Kontrollvorrichtung 12 erfasst werden.

Alternativ oder zusätzlich kann als Bilderfassungseinrichtung eine mobile Kamera 34.3 verwendet werden. Im Beispiel der Figur 1 hält der Sicherheitsbedienstete 18.1, der die Kontrollvorrichtung 12 beaufsichtigt, ein beispielsweise mittels Bluetooth mit der Kontrollvorrichtung 12 verbundenes Smartphone (oder Tablet-Computer) mit integrierter Kamera 34.3 bereit. Bei Bedarf, d. h., bei Alarmauslösung durch eine Software zur automatischen Bedrohungserkennung (automatic threat recognition, ATR) der Inspektionseinrichtung 16 der Kontrollvorrichtung 12, fertigt der Sicherheitsbedienstete ein Bild von der Person 10.1 an. Alternativ könnte der Sicherheitsbedienstete 18.1 auch der Person 10.1 das Smartphone oder den Tablet-Computer mit der integrierten Kamera 34.3 in die Hand geben. Die Person 10.1 kann dann eine Aufnahme von ihrem Gesicht selbst erstellen (Selfie).

Die Verwendung eines Abbilds des Gesichts der Person 10.1 als eindeutiges Identifikationsmerkmal für die Person 10.1 vereinfacht das vorstehend beschriebene Verfahren zusätzlich deutlich. Die Kontrollvorrichtung 12 ist auch hier eingerichtet, das Abbild des Gesichts der Person 10.1 als Identifikationsmerkmal dem Datensatz, der den Nachkontrollbereich der Person 10.1 bestimmt, zuzuordnen und an eine der Nachkontrollvorrichtungen 26.1 bis 26.3 oder einen zentralen Daten-Server 40 als Datenquelle für die Datensätze zu übermitteln. Der Daten-Server 40 ist mit der Kontrollvorrichtung 12 und den Nachkontrollvorrichtungen 26.1 bis 26.3 über ein Computernetzwerk (LAN und/oder WAN) bekannter Art verbunden und kann sich daher im Bereich der Kontrollstelle 1 oder räumlich davon weit abgesetzt befinden.

Beispielsweise kann der Datensatz durch die Kontrollvorrichtung 12 an die Nachkontrollvorrichtung 26.1 bis 26.3 übermittelt werden, die dem System als verfügbar angezeigt wird. Im Beispiel der Figur 1 ist die Anzeigeeinheit 20.4 der Nachkontrollvorrichtung 26.3 mit einem leeren Anzeigeinhalt dargestellt. Dies symbolisiert im Beispiel, dass die Nachkontrollvorrichtung verfügbar ist. Dementsprechend kann die Kontrollvorrichtung 12 einen den Nachkontrollbereich für die Person 10.1 bestimmenden Datensatz zusammen mit dem Abbild des Gesichts der Person 10.1 als Identifikationsmerkmal an die Nachkontrollvorrichtung 26.3 zur Anzeige auf der Anzeigeeinheit 20.4 übermitteln.

Alternativ könnte die nicht belegte Nachkontrollvorrichtung 26.3 den nächsten Datensatz einer nachzukontrollierenden Person 10.1 von der Kontrollvorrichtung 12 oder dem zentralen Daten-Server 40 abrufen. Dann kann die Kontrollvorrichtung 12 den Nachkontrollbereich für die Person 10.1, der durch den abgerufenen Datensatz bestimmt wird, zusammen mit dem Abbild des Gesichts der Person 10.1 als Identifikationsmerkmal auf der Anzeigeeinheit 20.4 anzeigen.

In beiden Fällen kann der Sicherheitsbedienstete 18.4 an der Nachkontrollvorrichtung 26.3 damit unmittelbar den von ihm nachzukontrollierenden Passagier in der Warteschlange 28 identifizieren bzw. erkennen und zur Nachkontrolle übernehmen.

In einer besonderen Weiterbildung des Systems ist die erste Kontrollvorrichtung 12 eingerichtet, basierend auf den Inspektionsdaten, die mittels der berührungslosen Inspektionseinrichtung 16 über die kontrollierte Person 10.1 erfasst wurden, das Identifikationsmerkmal für die Person zu erzeugen. Ebenso ist es möglich, dass die erste Kontrollvorrichtung 12 eingerichtet ist, basierend auf den Inspektionsdaten, die mittels der berührungslosen Inspektionseinrichtung 16 über die kontrollierte Person 10.1 erfasst wurden, als Identifikationsmerkmal alternativ oder zusätzlich zu einer Darstellung oder eines Abbilds der Person eines oder mehrere der folgenden Merkmale zu ermitteln: das Geschlecht der Person 10.1, den Körperbau der Person 10.1, die Körpergröße der Person 10.1, das geschätzte Körpergewicht der Person 10.1.

Beispielsweise kann als Identifikationsmerkmal ein Abbild des Gesichtes der Person 10.1 verwendet werden. Ein Abbild des Gesichts kann beispielsweise basierend auf einer oberflächlichen Abtastung der Person 10.1 mit reflektierten Röntgenstrahlen oder Millimeterwellen erzeug werden. Bei entsprechender Qualität könnte beispielsweise der grafische Stellvertreter der Person 10.1, der auf der Anzeigeeinheit 20.1 bzw. eine der Anzeigeeinheiten 20.2 bis 20.4 an einer der Nachkontrollvorrichtungen 26.1 bis 26.3 angezeigt wird, mit einem Abbild des Gesichts der Person 10.1 angezeigt werden.

Alternativ oder zusätzlich kann als Identifikationsmerkmal eines oder mehrere der folgenden Merkmale verwendet werden: das Geschlecht der Person 10.1, der Körperbau der Person 10.1, die Körpergröße der Person 10.1, das geschätzte Körpergewicht der Person 10.1. Entsprechend kann der grafische Stellvertreter (Avatar) der Person 10.1, der auf der Anzeigeeinheit 20.1 bzw. eine der Anzeigeeinheiten 20.2 bis 20.4 an einer der Nachkontrollvorrichtungen 26.1 bis 26.3 angezeigt wird, entsprechend modifiziert werden, d.h. entsprechend den verwendeten Identifikationsmerkmalen angepasst werden. Der Avatar als Strichzeichnung könnte beispielsweise entsprechend der Person als dünner oder korpulenter Mann dargestellt werden. Auch könnte der Avatar an die Körpergröße der Person angepasst werden, z.B. könnte neben dem Avatar eine Messlatte dargestellt werden.

Damit ist es wieder den Sicherheitsbediensteten 18.2 bis 18.4 an den Nachkontrollvorrichtungen 26.1 bis 26.3 möglich, eine nachzukontrollierende Person unmittelbar zu identifizieren.

Figur 2 zeigt ein erstes mögliches Ausführungsbeispiel für eine erste Kontrollvorrichtung 12a. Die Kontrollvorrichtung 12a ist zur automatischen Kontrolle der Person 10.1 bezüglich unter oder in der Kleidung verborgener Gegenstände mit einer Inspektionseinrichtung 16 zur berührungslosen Inspektion der Person 10.1 mittels Millimeterwellen ausgerüstet. Millimeterwellen liegen im elektromagnetischen Spektrum zwischen Radio- und Infrarotwellen und besitzen die einzigartige Eigenschaft, leichte Materialien wie Kleidungsstoffe zu durchdringen, aber an Gegenständen und der Haut der Person 10.1 reflektiert zu werden. Damit können Bereiche an der Person 10.1, in denen möglicherweise Gegenstände, wie Waffen oder Schmuggelware, unter oder in der Kleidung der Person 10.1 versteckt sind, detektiert werden.

Figur 2 zeigt ein erstes Beispiel für eine Kontrollvorrichtung 12 (der Figur 1). Die Kontrollvorrichtung 12a der Figur 2 besitzt als Inspektionseinrichtung 16* zur berührungslosen Inspektion der Person 10.1* eine Flat-Panel-Anordnung mit einem Phase-Array-Antennenfeld 16.1* zum Senden von Millimeterwellen in das Volumen vor der Anordnung. Die vom Körper der Person 10.1* reflektierten Millimeterwellen werden von dem Phase-Array-Antennenfeld 16.1* empfangen. Die über das 3D-Volumen vor der Flat-Panel-Anordnung erfassten Inspektionsdaten werden automatisch mit entsprechend programmierten Softwarealgorithmen in Echtzeit durch eine entsprechend programmierbare Steuereinrichtung, beispielsweise in Form eines Computers, der Kontrollvorrichtung 12a verarbeitet.

Um die Privatsphäre der inspizierten Person 10.1 zu schützen, erfolgt die Ergebnisdarstellung des Inspektionsvorgangs automatisiert und anonymisiert. D. h., im Wege der automatischen Kontrolle wird von der Kontrollvorrichtung 12a automatisch mittels der speziellen Datenverarbeitungsalgorithmen die Position verborgener Gegenstände erkannt und auf der Anzeigeeinheit 20.1* an einem Avatar als grafischen Stellvertreter der Person 10.1* angezeigt. Die an dem grafischen Stellvertreter markierten Positionen 13* entsprechen Körperbereichen, die als Nachkontrollbereiche der Person 10.1* auf verborgene Gegenstände in einer Nachkontrolle erneut zu kontrollieren sind.

Der Anzeigeinhalt der Anzeigeeinheit 10.1* ist links in der Figur 2 vergrößert dargestellt, um den Inhalt besser zu erkennen. Der Anzeigeinhalt 20.1* besteht aus zwei allgemeinen grafischen Darstellungen des grafischen Stellvertreters 11*, nämlich einer Vorderansicht 11.1* und einer Rückansicht 11.2*. Damit wird der Sicherheitsbediensteten 18.1* angezeigt, wo die Inspektionseinrichtung 16* einen möglicherweise verborgenen Gegenstand identifiziert hat.

Wie im Zusammenhang mit der Figur 1 erläutert, kann an der Kontrollvorrichtung 12a wenigstens eine Bilderfassungseinheit in Form einer Kamera 34.1* installiert sein. Die Kamera 34.1* ist bevorzugt eingerichtet, eine Gesichtsaufnahme der Person 10.1* als eindeutiges Identifikationsmerkmal für die Person 10.1* zu erzeugen, falls während der automatischen Inspektion der Person 10.1* ein nachzukontrollierender Bereich 13* identifiziert wird.

Alternativ oder zusätzlich kann an der Kontrollvorrichtung 12a eine mobile Bilderfassungseinheit in Form eines Smartphones oder eines Tablet-Computers mit einer integrierten Kamera 34.3* vorgesehen sein. Die Sicherheitsbedienstete 18.1* kann dann mit der mobilen Kamera 34.3* bei Bedarf (z. B. bei einem ATR-Alarm) ein Gesichtsbild der Person 10.1* als Identifikationsmerkmal aufnehmen. Alternativ kann der Person 10.1* ermöglicht werden, mithilfe der mobilen Kamera 34.3* ein Bild von ihrem Gesicht selbst aufzunehmen (Selfie). Die mobile Kamera 34.3* kann mittels einer bekannten Nahbereichsfunkverbindung mit der Kontrollvorrichtung 12a verbunden sein, wie beispielsweise Bluetooth oder NFC. jedoch ist auch eine Kabelverbindung mittels beispielsweise USB (Universal Synchronous Bus) möglich.

Figur 3 zeigt ein zweites Beispiel für eine mögliche Ausführung einer ersten Kontrollvorrichtung 12b, in der eine Inspektionseinrichtung (nicht im Detail gezeigt) zur berührungslosen Inspektion der Person 10.1** bezüglich verborgener Gegenstände mit Transmissions-Röntgentechnologie vorgesehen ist. Dazu wird die Person 10.1** auf einem Transportband durch eine Anordnung der Kontrollvorrichtung 12b bestehend aus einer Einrichtung 16.1** zur Erzeugung eines Röntgenstrahlenfächers und einer Detektionseinrichtung 16.2** zur Erfassung von Röntgenstrahlen, welche die Person 10.1** nicht absorbiert hat befördert. Basierend auf den mit der Detektionseinrichtung 16.2** erfassten Röntgenstrahlen wird ein Ganzkörpertransmissionsbild (Röntgenbild) der Person erzeugt und einem Sicherheitsbediensteten (hier nicht dargestellt, aber ähnlich wie in Figur 2) auf einer Anzeigeeinrichtung 20.1** angezeigt. Dabei werden, wie in der Ausführung der Figur 2, verdächtige Bereiche an der Person 10.1**, für die eine Nachkontrolle erforderlich ist, als Nachkontrollbereich 13** an einem grafischen Stellvertreter 11** angezeigt.

Ebenso wie in der Figur 2 angedeutet, können auch bei der Kontrollvorrichtung 12b der Figur 3 Erfassungseinrichtungen mit einer Kamera (in Figur 3 nicht explizit dargestellt) zur Erzeugung eines Gesichtsbilds der Person 10.1** als Identifikationsmerkmal vorgesehen sein; die Ausführungen zu den möglichen Kameras 34.1* und 34.3*, wie im Zusammenhang mit der Figur 2 erläutert, gelten bei der Anordnung der Figur 3 gleichermaßen oder entsprechend.

Es sei angemerkt, dass die in den Figuren 2 und 3 als Beispiel erläuterten Kontrollvorrichtungen 12a und 12b lediglich als Beispiel für die allgemein in Figur 1 dargestellte Kontrollvorrichtung 12 dienen. Dem Fachmann ist selbstverständlich klar, dass andere mögliche automatische Inspektionseinrichtungen 16 zur automatischen und berührungslosen Personenkontrolle ebenfalls verwendet werden können. Schließlich können auch verschiedene Inspektionseinrichtungen in einer Kontrollvorrichtung kombiniert werden. Beispielsweise könnten die Inspektionseinrichtungen der Kontrollvorrichtungen 12a der Figur 2 und 12b der Figur 3 auch in einer einzigen Kontrollvorrichtung 12 kombiniert werden.

Figur 4 zeigt beispielhaft den Anzeigeinhalt der Anzeigeeinheit 20.1* der Figur 2 in einer vergrößerten Darstellung. Der Anzeigeinhalt 20.1* besteht aus einer generischen grafischen Darstellung eines Stellvertreters bzw. Avatars 11* der kontrollierten Person. Der Avatar 11* ist als Vorderansicht 11.1* und als Rückansicht 11.2* dargestellt. Im Wege der automatischen und berührungslosen Inspektion der Person wurden beispielsweise Nachkontrollbereiche 13.1*, 13.2*, 13.3* bestimmt, die an der jeweiligen Vorderansicht 11.1* bzw. Rückansicht 11.2* des Avatars 11* visuell erkennbar hervorgehoben sind.

Eine visuelle Markierung kann beispielsweise in einer farblichen Kennzeichnung eines Nachkontrollbereiches bestehen. Ein Sicherheitsbediensteter erhält durch die Darstellung für die Nachkontrolle einen unmittelbaren Hinweis darauf, welche Körperbereiche der Person nachzukontrollieren sind. So können die mittels der Kontrollvorrichtung 12 bzw. 12a, 12b bereits erfassten Informationen betreffend möglicherweise verborgene Gegenstände bei der Nachkontrolle berücksichtigt werden.

An jeder der Nachkontrollvorrichtungen 26.1, 26.2, 26.3 (Figur 1) muss sichergestellt werden, dass eine nachzukontrollierende Person tatsächlich zu dem/den auf der jeweiligen Anzeigeeinheit 20.2, 20.3, 20.4 angezeigten Nachkontrollbereiche/n gehört. Dazu wird im dargestellten Beispiel (Figur 4), zusammen mit den Nachkontrollbereichen 13.1*, 13.2*, 13.3* auf der Anzeige 20.1* ein visuell unmittelbar überprüfbares Identifikationsmerkmal angezeigt. Das Identifikationsmerkmal ist ein Gesichtsbild 35 der nachzukontrollierenden Person. Damit ist es einem Sicherheitsbediensteten unmittelbar möglich, die ihm an dem anonymisierten grafischen Stellvertreter 11.1*, 11.2* angezeigten Nachkontrollbereiche 13.1*, 13.2*, 13.3* der dazugehörigen nachzukontrollierenden Person zuzuordnen. Eine falsche Zuordnung an den Nachkontrollstellen 26.1, 26.2, 26.3 auch bei der Bildung einer Warteschlange wird damit wirksam vermieden. Das eingangs beschriebene Auftreten einer Sicherheitslücke kann damit ohne erhöhten Personaleinsatz vermieden werden.

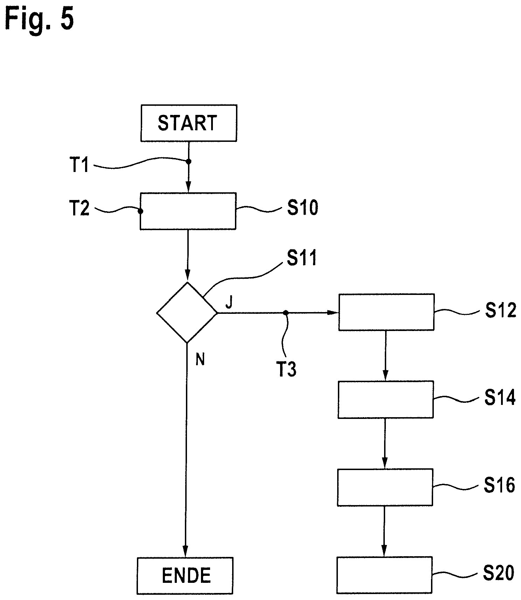

Figur 5 zeigt ein vereinfachtes Ablaufdiagramm für ein Kontrollverfahren zur automatischen Kontrolle von Personen bezüglich verborgener Gegenstände.

Nach dem Start des Verfahrens wird in einem Schritt S10 eine Person auf verborgene Gegenstände mittels eines berührungslosen Inspektionsverfahrens kontrolliert.

Im Schritt S10 wird die zu kontrollierende Person beispielsweise mit Röntgenstrahlen oder elektromagnetischen Millimeterwellen abgetastet, um ein Rückstreubild der Körperoberfläche der Person als Grundlage für eine automatische Detektion von verborgenen Gegenständen zu erzeugen. Es ist auch denkbar, die zu kontrollierende Person mit durchdringenden Röntgenstrahlen abzutasten und darauf basierend ein Transmissionsbild der Person als Grundlage für die automatische Detektion von verborgenen Gegenständen an oder in der Person zu erzeugen.

Falls (in einem Schritt S11) bei dieser Kontrolle nachzukontrollierende Bereiche für die Person bestimmt werden, weil das automatische Inspektionsverfahren mögliche verdeckte Gegenstände an der Person entdeckt hat, geht das Verfahren weiter zu Schritt S12.

In Schritt S12 werden den Nachkontrollbereich definierende Daten in einem Datensatz gespeichert.

Danach geht das Verfahren zum Schritt S14, in dem basierend auf einem erfassten äußeren Merkmal der Person ein eindeutiges Identifikationsmerkmal für die Person erzeugt wird.

Danach geht das Verfahren zum Schritt S16, in dem das erzeugte Identifikationsmerkmal dem Datensatz, der den Nachkontrollbereich der Person bestimmt, zugeordnet wird.

Anschließend geht das Verfahren zu einem Schritt S20 als Schnittstelle zu einem weiteren Kontrollverfahren, in dem eine genauere Kontrolle der für die Person bestimmten Nachkontrollbereiche erfolgt.

Falls (im Schritt S11) festgestellt wurde, dass während der berührungslosen Inspektion der Person kein Nachkontrollbereich bestimmt worden ist, bedeutet dies, dass die Person vom System automatisch als unbedenklich eingestuft wurde. Das Kontrollverfahren endet dann für diese Person und geht zum Schritt ENDE.

Ein Schritt zum Erfassen eines äußeren Merkmals der Person kann grundsätzlich zu den Zeitpunkten T1, T2 oder T3 in das Verfahren integriert werden, d. h., das Erfassen eines äußeren Merkmals der Person als Grundlage für das eindeutige Identifikationsmerkmal kann grundsätzlich vor, während oder nach dem automatischen Kontrollieren der Person erfolgen. Sollte es vor oder während der automatischen Kontrolle erzeugt werden, kann das erfasste äußere Merkmal sofort gelöscht werden, sobald feststeht, dass für die Person kein Nachkontrollbereich bestimmt wurde.

In einer besonderen Weiterbildung kann vorgesehen sein, dass beispielsweise im Schritt S12 die Grundlage für das eindeutige Identifikationsmerkmal für die Person basierend auf mittels des berührungslosen Inspektionsverfahrens im Schritt S10 erfasster Merkmale der Person erzeugt wird. Wie bereits an anderer Stelle erläutert, könnte beispielsweise ein Abbild des Gesichts der Person, welches durch Abtastung mit reflektierten Röntgenstrahlen oder Millimeterwellen erfasst wurde, als eindeutiges Identifikationsmerkmal für die Person verwendet werden.

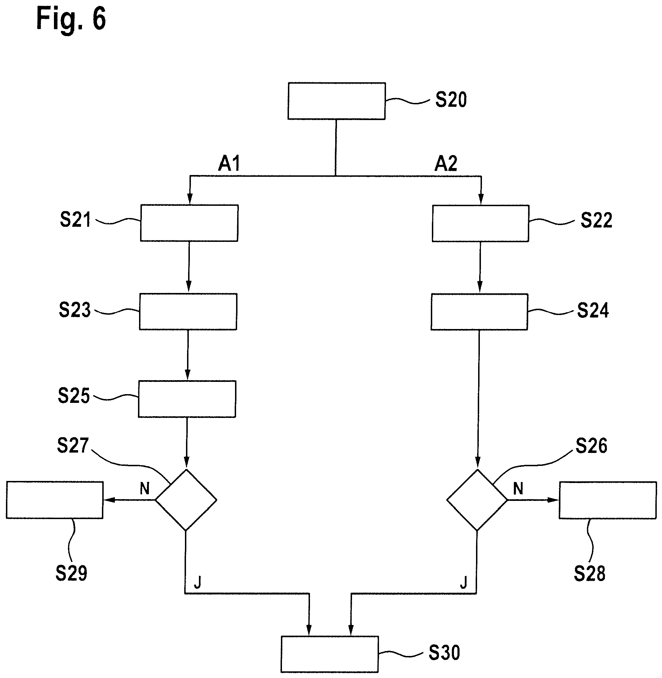

Figur 6 zeigt eine schematische Flussdiagrammdarstellung eines Nachkontrollverfahrens zur Nachkontrolle einer Person zum Auffinden verborgener Gegenstände. Das im Zusammenhang mit Figur 6 erläuterte Nachkontrollverfahren wird bevorzugt im Anschluss an ein Kontrollverfahren gemäß Figur 5 im Rahmen eines mehrstufigen Kontrollverfahrens ausgeführt, wenn dort ein Nachkontrollbereich für die Person bestimmt worden ist. Somit beginnt das Nachkontrollverfahren der Figur 6 mit dem Schritt S20, in dem entsprechend einem der Person zugeordneten Datensatz ein visuell erkennbarer Nachkontrollbereich an einem grafisch dargestellten Stellvertreter der Person (Avatar) angezeigt wird.

Gemäß einer ersten Alternative A1 des Verfahrens geht das Verfahren zu einem Schritt S21, in dem dasselbe äußere Merkmal der Person wie bei der Durchführung des Kontrollverfahrens der Figur 5 erfasst wird.

In einem nächsten Schritt S23 wird ebenfalls entsprechend dem Verfahren der Figur 5 das auf dem erfassten äußeren Merkmal basierende eindeutige Identifikationsmerkmal für die Person erzeugt.

In einem anschließenden Schritt S25 wird die Zugehörigkeit eines an der Anzeigeeinrichtung angezeigten Nachkontrollbereichs zu einer vor Ort befindlichen nachzukontrollierenden Person verifiziert. Dazu wird das an der Nachkontrollstelle erzeugte eindeutige Identifikationsmerkmal mit dem Identifikationsmerkmal auf Übereinstimmung überprüft, das einem angezeigten Nachkontrollbereich zugeordnet ist. Alternativ kann mithilfe des an der Nachkontrollstelle erzeugten Identifikationsmerkmals der zugehörige Datensatz, der den Nachkontrollbereich für die Person bestimmt, an einer Datenquelle identifiziert und von dort abgerufen werden. Bei der Datenquelle kann es sich um den zentralen Daten-Server 40 (Figur 1) des Checkpoints handeln, mit dem die entsprechende erste Kontrollvorrichtung 12, an der das Verfahren gemäß Figur 5 durchgeführt wird, sowie die entsprechenden Nachkontrollvorrichtungen 26.1 bis 26.3, an der jeweils das Verfahren gemäß Figur 6 durchgeführt wird, über geeignete Datenverbindungen 41.1 bzw. 41.2, 41.3 und 41.4 verbunden sind. Wie bereits an anderer Stelle angemerkt, ist der Daten-Server 40 mit der Kontrollvorrichtung 12 und den Nachkontrollvorrichtungen 26.1 bis 26.3 über ein Computernetzwerk (LAN und/oder WAN) bekannter Art verbunden. Daher kann sich der Daten-Server 40 grundsätzlich im Bereich der Kontrollstelle 1 oder räumlich davon weit abgesetzt befinden.

Sollte in einem Schritt S27 festgestellt werden, dass entweder der an der Nachkontrollvorrichtung (z. B. 26.1) an der Anzeigeeinrichtung (z. B. 20.2) angezeigte Nachkontrollbereich nicht zu der nachzukontrollierenden Person (z. B. 30.2) passt, hat die betreffende Person (30.2) möglicherweise in der Warteschlange 28 vor den Nachkontrollstellen26.1, 26.2, 26.3 mit einer anderen Person den Platz (z. B. 30.1) in der Warteschlange 28 getauscht. Entsprechend ist davon auszugehen, dass an einer anderen Nachkontrollstelle (z. B. 26.2) eine entsprechende Alarmmeldung ausgelöst wird. Das bedeutet, dass in dieser konkreten, aber beispielhaften Situation die beiden Personen (30.1., 30.2) die Nachkontrollstellen (26.1, 26.2) tauschen müssen und dann das Verfahren jeweils wieder an Schritt S20 beginnt.

Wenn im Schritt S27 festgestellt wurde, dass die nachzukontrollierende Person zum angezeigten Nachkontrollbereich gehört, kann in einem sich anschließenden Schritt S30 die entsprechende Nachkontrolle der Person erfolgen.

Gemäß einer alternativen Ausführung A2 des Nachkontrollverfahrens geht das Verfahren nach Schritt S20 zu Schritt S22.

In Schritt S22 wird zusammen mit einem angezeigten Nachkontrollbereich ein an einer vorhergehenden Kontrollstelle (z. B. 12 in Figur 1) zugeordnetes Identifikationsmerkmal zusammen mit dem Nachkontrollbereich angezeigt. Dabei kann es sich um eine Aufnahme, beispielsweise eine Gesichtsaufnahme der nachzukontrollierenden Person handeln.

In einem sich anschließenden Schritt S24 wird die Zugehörigkeit des angezeigten Nachkontrollbereichs zu der an der Nachkontrollstelle erscheinenden Person visuell mittels Vergleichen des angezeigten Identifikationsmerkmals mit der Person verifiziert.

Falls in einem Schritt S26 durch den Sicherheitsbediensteten eine Übereinstimmung festgestellt wird, geht das Verfahren ebenfalls zu Schritt S30, in dem die Nachkontrolle der Person entsprechend den angezeigten Nachkontrollbereichen erfolgen kann.

Sollte der visuelle Vergleich zu dem Ergebnis führen, dass die an der Nachkontrollstelle erschienene Person nicht zu dem angezeigten Identifikationsmerkmal passt, wird die Person in einem Schritt S28 ähnlich dem Schritt S29 der Alternative A1 zu einer der anderen Nachkontrollstellen weitergeleitet. Dort beginnt das Verfahren ebenfalls wieder am Schritt S20 entsprechend.

Abschließend sei angemerkt, dass das im Zusammenhang mit Figur 5 erläuterte Kontrollverfahren in Kombination mit dem anhand von Figur 6 erläuterten Nachkontrollverfahren zusammen ein mehrstufiges Kontrollverfahren bildet. Bei einem derartigen mehrstufigen Kontrollverfahren kann auch bei der Ausbildung einer Warteschlang vor den Nachkontrollstellen keine Sicherheitslücke auftreten.

Zusammenfassend wurde hier ein mehrstufiges Kontrollsystem mit wenigstens einer Kontrollvorrichtung an einem ersten Ort und wenigstens einer Nachkontrollstelle an einem zweiten Ort mit einer Nachkontrollvorrichtung vorgestellt. Die Kontrollvorrichtung weist zur automatischen Kontrolle einer Person bezüglich verborgener Gegenstände eine Inspektionseinrichtung zur berührungslosen Inspektion der Person auf und ist zur Bestimmung eines Nachkontrollbereichs der Person und Speichern von den Nachkontrollbereich definierenden Daten in einem Datensatz und zum Erzeugen basierend auf einem erfassten äußeren Merkmal der Person eines eindeutigen Identifikationsmerkmals für die Person und Zuordnen zu dem Datensatz der Person eingerichtet. Die Nachkontrollvorrichtung weist eine Anzeigevorrichtung zur Anzeige eines grafischen Stellvertreters einer Person auf, wobei die Anzeigeeinrichtung eingerichtet ist, entsprechend einem der Person zugeordneten Datensatz einen Nachkontrollbereich der Person zum Auffinden verborgener Gegenstände visuell erkennbar anzuzeigen. Die Nachkontrollvorrichtung kann eingerichtet sein basierend auf einem erfassten Merkmal der Person das eindeutige Identifikationsmerkmal für die Person zu erzeugen. Alternativ kann die Nachkontrollvorrichtung eingerichtet sein, ein dem Datensatz eines Nachkontrollbereichs an einer anderen Kontrollstelle zugeordnetes Identifikationsmerkmal, insbesondere eine Aufnahme, besonders bevorzugt eine Gesichtsaufnahme, der Person, für eine visuelle Verifikation der Zugehörigkeit des Datensatzes zu der Person anzuzeigen. Des Weiteren betrifft die Erfindung ein entsprechendes Kontrollverfahren, ein entsprechendes Nachkontrollverfahren sowie ein entsprechendes mehrstufiges Kontrollverfahren.

## Patentansprüche

1. Mehrstufiges Kontrollsystem mit wenigstens einer Kontrollvorrichtung (12; 12a; 12b) an einem ersten Ort und wenigstens einer Nachkontrollstelle an einem zweiten Ort mit wenigstens einer Nachkontrollvorrichtung (26.1, 26.2, 26.3),
wobei die Kontrollvorrichtung (12; 12a; 12b) zur automatischen Kontrolle einer Person (10.1) bezüglich verborgener Gegenstände eine Inspektionseinrichtung (16) zur berührungslosen Inspektion der Person (10.1) aufweist, die zur Bestimmung eines Nachkontrollkörperbereichs (13; 13.1, 13.2, 13.3) der Person (10.1) und Speicherung von den Nachkontrollkörperbereich definierenden Daten in einem Datensatz eingerichtet ist, und die Kontrollvorrichtung (12; 12a; 12b) eingerichtet ist, basierend auf einem erfassten äußeren Merkmal der Person (10.1) ein darauf basierendes eindeutiges Identifikationsmerkmal für die Person (10.1) zu erzeugen und dem Datensatz der Person (10.1) zuzuordnen,
wobei die Nachkontrollvorrichtung (26.1, 26.2, 26.3) eine Anzeigeeinrichtung (20.2, 20.3, 20.4) zur Anzeige eines grafischen Stellvertreters (11.1, 11.2) der Person (10.1) aufweist, wobei die Anzeigeeinrichtung (20.2, 20.3, 20.4) eingerichtet ist, entsprechend dem der Person (10.1) zugeordneten Datensatz den Nachkontrollkörperbereich (13; 13.1, 13.2, 13.3) der Person (10.1) an dem grafischen Stellvertreter zum Auffinden verborgener Gegenstände visuell erkennbar anzuzeigen; und
wobei die Nachkontrollvorrichtung (26.1, 26.2, 26.3) eingerichtet ist, basierend auf einem erneuten Erfassen des äußeren Merkmals der Person (10.1) das eindeutige Identifikationsmerkmal für die Person (10.1) erneut zu erzeugen, und:
entweder basierend auf dem erneut erzeugten Identifikationsmerkmal der Person (10.1) eine Zugehörigkeit des angezeigten Nachkontrollkörperbereichs zu der Person (10.1) zu verifizieren;
oder vermittels des erneut erzeugten Identifikationsmerkmals den der Person (10.1) zugeordneten Datensatz, der den Nachkontrollkörperbereich definiert, von einer Datenquelle abzurufen.

2. Mehrstufiges Kontrollsystem gemäß Anspruch 1, wobei die Kontrollvorrichtung (12; 12a; 12b) wenigstens eine Erfassungseinheit (32.1, 34.1, 34.2, 34.3) für wenigstens ein biometrisches Merkmal der Person (10.1) als Basis für das Identifikationsmerkmal aufweist oder damit verbunden ist.

3. Mehrstufiges Kontrollsystem gemäß Anspruch 2, wobei das biometrische Merkmal wenigstens eines ist von: das Papillarmuster eines Fingers der Person (10.1), die Handgeometrie und/oder die Handlinien einer Hand der Person (10.1), die Irisstruktur und/oder die Retinastruktur wenigstens eines Auges der Person (10.1), die Stimme der Person (10.1), ein Abbild, bevorzugt des Gesichts, der Person (10.1),.

4. Mehrstufiges Kontrollsystem gemäß einem der Ansprüche 1-3, wobei die Kontrollvorrichtung (12; 12a; 12b) wenigstens eine Bilderfassungseinheit als eine Erfassungseinheit (34.1, 34.2, 34.3) aufweist oder damit verbunden ist, wobei die Bilderfassungseinheit zur Erzeugung einer Gesichtsaufnahme der Person (10.1) als Identifikationsmerkmal eingerichtet ist.

5. Mehrstufiges Kontrollsystem gemäß einem der Ansprüche 1-4, wobei die Inspektionseinrichtung (16) eingerichtet ist, i) die zu kontrollierende Person (10.1) mit Röntgenstrahlen oder elektromagnetischen Millimeterwellen abzutasten und ein Rückstreubild der Körperoberfläche der Person (10.1) zu erzeugen oder ii) die zu kontrollierende Person (10.1) mit Röntgenstrahlen abzutasten und ein Transmissionsbild der Person (10.1) zu erzeugen.

6. Mehrstufiges Kontrollverfahren mit wenigstens einer ersten Stufe mit einem Kontrollverfahren mit automatischem Kontrollieren (S10) einer Person (10.1) bezüglich verborgener Gegenstände mittels eines berührungslosen Inspektionsverfahrens und wenigstens einer zweiten Stufe mit einem Nachkontrollverfahren zur Nachkontrolle der Person (10.1) zum Auffinden der verborgenen Gegenstände,
wobei in dem Kontrollverfahren:
- ein Nachkontrollkörperbereich (13; 13.1, 13.2, 13.3) der Person (10.1) bestimmt wird und den Nachkontrollkörperbereich definierende Daten in einem Datensatz gespeichert werden;
- ein äußeres Merkmal der Person (10.1) erfasst (T1; T2; T3) wird;
- ein auf dem äußeren Merkmal basierendes eindeutiges Identifikationsmerkmal für die Person (10.1) erzeugt (S14) wird; und
- das Identifikationsmerkmal dem Datensatz zugeordnet (S16) wird;
wobei in dem Nachkontrollverfahren :
- ein grafischer Stellvertreter der Person (10.1) und daran entsprechend dem der Person (10.1) zugeordneten Datensatz der visuell erkennbare Nachkontrollkörperbereich (13; 13.1, 13.2, 13.3) an dem grafischen Stellvertreter angezeigt (S20) wird;
- das äußere Merkmal der Person (10.1) erneut erfasst (S23) wird und das darauf basierende eindeutige Identifikationsmerkmal für die Person (10.1) erneut erzeugt (S25) wird; und
entweder basierend auf dem erneut erzeugten Identifikationsmerkmal der Person (10.1) eine Zugehörigkeit des angezeigten Nachkontrollkörperbereichs zu der Person (10.1) verifiziert wird,
oder vermittels des erneut erzeugten Identifikationsmerkmals der der Person (10.1) zugeordnete Datensatz, der den Nachkontrollkörperbereich definiert, von einer Datenquelle abgerufen wird.

7. Mehrstufiges Kontrollverfahren gemäß Anspruch 6, wobei beim Erfassen des äußeren Merkmals der Person (10.1) wenigstens ein biometrisches Merkmal der Person (10.1) erfasst wird.

8. Mehrstufiges Kontrollverfahren gemäß Anspruch 7, wobei das biometrische Merkmal wenigstens eines ist von: das Papillarmuster eines Fingers der Person (10.1), die Handgeometrie und/oder die Handlinien einer Hand der Person (10.1), die Irisstruktur und/oder die Retinastruktur wenigstens eines Auges der Person (10.1), die Stimme der Person (10.1), ein Abbild, bevorzugt des Gesichts, der Person (10.1).

9. Mehrstufiges Kontrollverfahren gemäß einem der Ansprüche 6-8, wobei bei dem automatischen Kontrollieren (S10),
i) die zu kontrollierende Person (10.1) mit Röntgenstrahlen oder elektromagnetischen Millimeterwellen abgetastet und ein Rückstreubild der Körperoberfläche der Person (10.1) erzeugt wird oder
ii) die zu kontrollierende Person (10.1) mit Röntgenstrahlen abgetastet und ein Transmissionsbild der Person (10.1) erzeugt wird.

## Claims

1. Multistage inspection system with at least one inspection device (12; 12a; 12b) at a first location and at least one post-inspection location at a second location with at least one post-inspection device (26.1, 26.2, 26.3),
wherein the inspection device (12; 12a; 12b) comprises, for automatic inspection of a person (10.1) with respect to concealed objects, an inspection device (16) for non-contact inspection of the person (10.1), which inspection device (16) is adapted to determine a post-inspection body area (13; 13.1, 13.2, 13.3) of the person (10. 1) and to store data defining the post-control body area in a data set, and the inspection device (12; 12a; 12b) is configured to generate and assign to the data set of the person (10.1) a unique identification feature for the person (10.1) based on a detected external feature of the person (10.1),
wherein the post-inspection device (26.1, 26.2, 26.3) comprises display means (20.2, 20.3, 20.4) for displaying a graphical proxy (11.1, 11.2) of the person (10.1), wherein the display means (20.2, 20.3, 20. 4) is configured to visually display the post-inspection body area (13; 13.1, 13.2, 13.3) of the person (10.1) on the graphical proxy for finding concealed objects, according to the data set associated with the person (10.1); and
wherein the post-inspection device (26.1, 26.2, 26.3) is configured to regenerate the unique identification feature for the person (10.1) based on a reacquisition of the external feature of the person (10.1), and:
either to verify, based on the re-generated identification feature of the person (10.1), an affiliation of the displayed post-inspection body area to the person (10.1);
or to retrieve, by means of the regenerated identification feature, the data set associated with the person (10.1) defining the post-inspection body area from a data source.

2. Multistage inspection system according to claim 1, wherein the inspection device (12; 12a; 12b) comprises or is connected to at least one detection unit (32.1, 34.1, 34.2, 34.3) for at least one biometric feature of the person (10.1) as a basis for the identification feature.

3. Multistage inspection system according to claim 2, wherein the biometric feature is at least one of: the papillary pattern of a finger of the person (10.1), the hand geometry and/or the palm lines of a hand of the person (10.1), the iris structure and/or the retinal structure of at least one eye of the person (10.1), the voice of the person (10.1), an image, preferably of the face, of the person (10.1).

4. Multistage inspection system according to any of the claims 1-3, wherein the inspection device (12; 12a; 12b) comprises or is connected to at least one image acquisition unit as an acquisition unit (34.1, 34.2, 34.3), wherein the image acquisition unit is configured to generate a facial image of the person (10.1) as an identification feature.

5. Multistage inspection system according to any of the claims 1-4, wherein the inspection unit (16) is configured to i) scan the person (10.1) to be inspected with X-rays or electromagnetic millimeter waves and generate a backscatter image of the body surface of the person (10.1) or ii) scan the person (10.1) to be inspected with X-rays and generate a transmission image of the person (10.1).

6. Multi-stage inspection method comprising at least a first stage comprising an inspection method with automatic inspection (S10) of a person (10.1) regarding concealed objects by means of a non-contact inspection method, and at least a second stage comprising a post inspection method for post inspection of the person (10.1) to find the concealed objects,
wherein in the inspection method:
- a post-inspection body area (13; 13.1, 13.2, 13.3) of the person (10.1) is determined, and data defining the post-inspection body area is stored in a data set;
- an external characteristic of the person (10.1) is detected (T1; T2; T3);
- a unique identification feature for the person (10.1) is generated (S14) based on the external feature; and
- associating (S16) the identification feature with the data set;
wherein in the post-control method:
- a graphical proxy of the person (10.1) and thereon, corresponding to the data set associated with the person (10.1), the visually recognizable post-inspection body area (13; 13.1, 13.2, 13.3) is displayed (S20) on the graphical proxy; and
- the external feature of the person (10.1) is re-acquired (S23) and the unique identification feature for the person (10.1) based thereon is re-generated (S25); and
either based on the re-generated identification feature of the person (10.1), an affiliation of the displayed post-inspection body area to the person (10.1) is verified,
or the data set associated with the person (10.1) is retrieved from a data source by means of the regenerated identification feature, which data set defines the post-inspection body area.

7. Multi-stage control method according to claim 6, wherein at least one biometric feature of the person (10.1) is detected when the external feature of the person (10.1) is detected.

8. Multi-stage control method according to claim 7, wherein the biometric feature is at least one of: the papillary pattern of a finger of the person (10.1), the hand geometry and/or the palm lines of a hand of the person (10.1), the iris structure and/or the retinal structure of at least one eye of the person (10.1), the voice of the person (10.1), an image, preferably of the face, of the person (10.1).

9. Multi-stage control method according to any one of the claims 6-8, wherein in the automatic control (S10),
i) the person (10.1) to be controlled is scanned with X-rays or electromagnetic millimeter waves and a backscatter image of the body surface of the person (10.1) is generated, or
ii) the person (10.1) to be checked is scanned with X-rays and a transmission image of the person (10.1) is generated.

## Revendications

1. Système de contrôle à plusieurs étapes, ayant au moins un dispositif de contrôle (12; 12a; 12b) à un premier emplacement, et au moins un point de post-contrôle à un deuxième emplacement ayant au moins un dispositif de post-contrôle (26.1, 26.2, 26.3),
cependant que le dispositif de contrôle (12; 12a; 12b), pour le contrôle automatique d'une personne (10.1) en ce qui concerne des objets cachés, comporte un équipement d'inspection (16) pour l'inspection sans contact de la personne (10.1), lequel est équipé pour la détermination d'une zone corporelle de post-contrôle (13; 13.1; 13.2; 13.3) de la personne (10.1) et pour la mémorisation, dans un jeu de données, de données définissant la zone corporelle de post-contrôle, et le dispositif de contrôle (12; 12a; 12b) est équipé pour, sur base d'une caractéristique extérieure saisie de la personne (10.1), générer pour la personne (10.1) et affecter au jeu de données de la personne (10.1) une caractéristique d'identification univoque, basée sur ladite caractéristique extérieure,
cependant que le dispositif de post-contrôle (26.1, 26.2, 26.3) comporte un équipement d'affichage (20.2, 20.3, 20.4) pour l'affichage d'un représentant graphique (11.1, 11.2) de la personne (10.1), cependant que l'équipement d'affichage (20.2, 20.3, 20.4) est équipé pour, en correspondance avec le jeu de données affecté à la personne (10.1), afficher de façon visuellement reconnaissable au représentant graphique la zone corporelle de post-contrôle (13; 13.1; 13.2; 13.3) de la personne (10.1) afin de trouver des objets cachés, et
cependant que le dispositif de post-contrôle (26.1, 26.2, 26.3) est équipé pour, sur la base d'une nouvelle saisie de la caractéristique extérieure de la personne (10.1), générer à nouveau la caractéristique d'identification univoque pour la personne (10.1), et :
soit, sur la base de la caractéristique d'identification à nouveau générée de la personne (10.1), vérifier une appartenance de la zone corporelle de post-contrôle affichée à la personne (10.1) ;
soit, au moyen de la caractéristique d'identification à nouveau générée, récupérer dans une source de données le jeu de données affecté à la personne (10.1) et définissant la zone corporelle de post-contrôle.

2. Système de contrôle à plusieurs étapes selon la revendication 1, cependant que le dispositif de contrôle (12; 12a; 12b) comporte ou est reliée à au moins une unité de saisie (32.1, 34.1, 34.2, 34.3) pour au moins une caractéristique biométrique de la personne (10.1) comme base pour la caractéristique d'identification.

3. Système de contrôle à plusieurs étapes selon la revendication 2, cependant que la caractéristique biométrique est au moins une de : le motif papillaire d'un doigt de la personne (10.1), la géométrie de la main et/ou les lignes de la main d'une main de la personne (10.1), la structure de l'iris et/ou la structure de la rétine d'au moins un oeil de la personne (10.1), la voix de la personne (10.1), une image, de préférence du visage, de la personne (10.1).

4. Système de contrôle à plusieurs étapes selon une des revendications de 1 à 3, cependant que le dispositif de contrôle (12; 12a; 12b) comporte ou est relié à au moins une unité de saisie d'image en tant qu'une unité de saisie (34.1, 34.2, 34.3), cependant que l'unité de saisie d'image est équipée pour la génération d'une prise de vue du visage de la personne (10.1) en tant que caractéristique d'identification.

5. Système de contrôle à plusieurs étapes selon une des revendications de 1 à 4, cependant que le dispositif d'inspection (16) est équipé i) pour explorer aux rayons X ou aux ondes électromagnétiques millimétriques la personne (10.1) à contrôler et générer une image de rétrodiffusion de la surface corporelle de la personne (10.1), ou ii) explorer aux rayons X la personne (10.1) à contrôler et générer une image de transmission de la personne (10.1).

6. Système de contrôle à plusieurs étapes ayant au moins une première étape avec un procédé de contrôle à contrôle automatique (S10) d'une personne (10.1) en ce qui concerne des objets cachés, au moyen d'un procédé d'inspection sans contact, et au moins une deuxième étape avec un procédé de post-contrôle pour le post-contrôle de la personne (10.1) pour trouver les objets cachés,
cependant que, dans le procédé de contrôle :
- une zone corporelle de post-contrôle (13; 13.1; 13.2; 13.3) de la personne (10.1) est déterminée, et des données définissant la zone corporelle de post-contrôle sont mémorisées dans un jeu de données ;
- une caractéristique extérieure de la personne (10.1) est saisie (T1; T2; T3) ;
une caractéristique d'identification univoque pour la personne (10.1), basée sur la caractéristique extérieure, est générée (S14) ; et
- la caractéristique d'identification est affectée (S 16) au jeu de données ;
cependant que, dans le procédé de post-contrôle,
- un représentant graphique de la personne (10.1) et, à lui, en correspondance avec le jeu de données affecté à la personne (10.1), la zone corporelle visuellement reconnaissable de post-contrôle (13; 13.1; 13.2; 13.3) est affiché (S20) au représentant graphique ;
- la caractéristique extérieure de la personne (10.1) est à nouveau saisie (S23), et la caractéristique d'identification univoque pour la personne (10.1), basée dessus, est à nouveau générée (S25) ; et
- soit, sur la base de la caractéristique d'identification à nouveau générée de la personne (10.1), une appartenance de la zone corporelle de post-contrôle affichée à la personne (10.1) est vérifiée,
- soit, au moyen de la caractéristique d'identification à nouveau générée, le jeu de données affecté à la personne (10.1) et définissant la zone corporelle de post-contrôle est récupéré dans une source de données.

7. Système de contrôle à plusieurs étapes selon la revendication 6, cependant que, lors de la saisie de la caractéristique extérieure de la personne (10.1), au moins une caractéristique biométrique de la personne (10.1) est saisie.

8. Système de contrôle à plusieurs étapes selon la revendication 7, cependant que la caractéristique biométrique est au moins une de : le motif papillaire d'un doigt de la personne (10.1), la géométrie de la main et/ou les lignes de la main d'une main de la personne (10.1), la structure de l'iris et/ou la structure de la rétine d'au moins un oeil de la personne (10.1), la voix de la personne (10.1), une image, de préférence du visage, de la personne (10.1).

9. Système de contrôle à plusieurs étapes selon une des revendications de 6 à 8, cependant que, lors du contrôle automatique (S10),
i) la personne (10.1) à contrôler est explorée aux rayons X ou aux ondes électromagnétiques millimétriques, et une image de rétrodiffusion de la surface corporelle de la personne (10.1) est générée, ou
ii) la personne (10.1) à contrôler est explorée aux rayons X, et une image de transmission de la personne (10.1).est générée.
